# EUROPEAN PATENT APPLICATION

(11) **EP 4 761 312 A1**
(43) Date of publication of application: **17.06.2026**
(21) Application number: 24219718.4
(22) Date of filing: 13.12.2024
(51) Int. Cl.: H04W 12/033, H04W 12/037, H04W 12/041, H04W 12/0431

(54) **USER EQUIPMENT, CONTROL PLANE ENTITY, USER PLANE ENTITY, KEY DERIVATION ENTITY, AND TELECOMMUNICATION SYSTEM**

(71) Applicant: Deutsche Telekom AG, 53113 Bonn (DE)
(72) Inventor: COLOM IKUNO, Josep, 2100 Korneuburg (AT); PÄTZOLD, Thomas, 53175 Bonn (DE)
(74) Representative: 2SPL Patentanwälte PartG mbB

(57) **Abstract**

The present disclosure provides secure communication in telecommunication systems by enabling efficient key management for Non-Access Stratum (NAS) security contexts and user plane (UP) flows. It provides a hierarchical key derivation framework where a further key such as a security anchor key, derived from a long-term key shared between the User Equipment (UE) and the Core Network (CN), is distributed to control plane (CP) and user plane (UP) entities. These entities may further derive encryption and integrity protection keys specific to their functions, ensuring robust and context-specific security. The UE, CP, and UP entities may maintain cryptographic state machines for synchronization and support dynamic management of keys for multiple simultaneous flows. The present disclosure may apply to modular and scalable network architectures, such as 5G and future 6G systems, enhancing security, flexibility, and interoperability across diverse network scenarios, including private, hybrid, and distributed networks.

## Description

### Field

The present disclosure relates to mobile network security, specifically in the context of managing encryption and key generation for Non-Access Stratum (NAS) communication and user plane in telecommunications systems.

### Background

NAS is a protocol used to manage signaling between a User Equipment (UE) and core network (CN) entities, covering functions like registration, session management, and mobility management in mobile networks. As mobile networks advance towards 6G, a fundamental shift is anticipated in how NAS communications are managed, with a particular focus on disaggregation of functions. Unlike traditional systems where NAS signaling and security are centrally terminated at an Access and Mobility Management Function (AMF), future architectures may envision a more distributed approach, where multiple network functions may independently handle specific aspects of NAS communication with the UE. This shift aims to enhance flexibility, reduce latency, and improve overall network scalability, but it also introduces significant challenges related to key management and secure communication.

In the current 5G mobile network architecture, NAS communication is centrally terminated by the AMF in the core network. The AMF is responsible for establishing and maintaining a secure NAS protocol context for each UE, through which signaling information for functions like mobility management and session control is securely transmitted. The AMF operates in conjunction with several other core network functions, including the Session Management Function (SMF), the Policy Control Function (PCF), and authentication and authorization servers such as the Authentication Server Function (AUSF), the Authentication Credential Repository and Processing Function (ARPF), and the Security Anchor Function (SEAF). The SEAF, which is typically integrated within the AMF, plays a key role in deriving an initial security anchor key (K_{SEAF}), which is a further key used for deriving NAS encryption and integrity keys, while the ARPF securely stores long-term cryptographic keys, providing a foundation for generating temporary keys used during UE network access and mobility. The Access Network (AN), of which the most typical example is the Radio Access Network (RAN), serves as a bridge between the UE and the core network, transmitting NAS messages between the UE and the core network.

A problem addressed by the present disclosure arises from the transition to a disaggregated NAS model, where NAS signaling may no longer be centrally terminated by a single AMF but may be divided across multiple network functions, each communicating directly with the UE via the AN. While this disaggregated approach provides operational flexibility and is promising for 6G's anticipated network demands, it creates challenges in key management and secure communication context synchronization. The current state of the art does not address how to create and manage these multiple encryption contexts efficiently without compromising security or operational performance. Existing systems lack a defined approach for managing multiple parallel NAS security contexts across different network entities, making it difficult to ensure consistent encryption and integrity protection as NAS communication shifts to a disaggregated model. Similarly, distributed NAS creates new challenges for key generation for the User Plane (UP). In this case, the challenge arise from the fact that the UP is related to a SMF, which in a disaggregated NAS model is not related to the NAS security context between the AMF and the UE, which is responsible for mobility management (MM), but rather to the NAS security context between the UE and the SMF, which is responsible for session management (SM). Analogously, several SM security contexts may simultaneously exist, which further increases the complexity of key generation for user plane.

Thus, there is a need for secure, scalable key generation and distribution in a distributed NAS architecture.

### Summary

This need is addressed by apparatuses and methods in accordance with the independent claims. Possibly advantageous embodiments are addressed by the dependent claims.

According to a first aspect of the present disclosure, a UE for use in a telecommunication system is proposed. The user equipment comprises a processor configured to derive, from a long-term key shared with a CN of the telecommunication system, a plurality of encryption and/or integrity protection keys for a plurality of NAS security contexts and/or user plane (UP) flows. The user equipment further comprises a communication interface configured to establish encrypted and/or integrity-protected communication for the plurality of NAS security contexts and/or UP flows using one or more of the keys. Thus, the UE can derive specific keys for securing communication in both the NAS and UP domains. The communication interface uses the derived keys to protect communication integrity and/or confidentiality. This separation may enable secure, isolated handling of multiple NAS and UP contexts. An advantage may be an enhanced granularity of security across diverse traffic flows in modern networks.

According to some embodiments, the processor is configured to associate a derived encryption and/or integrity protection key with a purpose or type of data it protects, and/or one or more network identifiers. This may enable the processor to tie each key to a specific purpose, such as session management, mobility, or user plane data. Associating keys with identifiers may ensure precise and context-specific security. An advantage may be improved security management, as each key is used strictly for its intended purpose.

According to some embodiments, the processor is configured to associate a derived encryption and/or integrity protection key with a UP flow, a NAS security context, and/or a NAS container type of NAS messages based on their purpose. This may ensure that keys are tightly linked to distinct traffic categories, such as UP flows or NAS messages for mobility or session management. An advantage may be the secure isolation of different traffic types, preventing unauthorized access or key misuse across contexts.

According to some embodiments, the processor is configured to derive an encryption and/or integrity protection key based on a NAS or UP request made by the UE to the CN. Key derivation may be triggered dynamically by specific requests, such as a NAS registration or PDU (Protocol Data Unit) session setup. This may ensure that keys are generated only when needed, reducing overhead. An advantage may be efficient key usage aligned with real-time communication needs.

According to some embodiments, the UE further comprises a storage configured to store the long-term key shared with the CN of the telecommunication system, such as a Universal Subscriber Identity Module (USIM). The processor is configured to derive a key, for example a security anchor key, based on the long-term key and one or more parameters received from the CN. The derivation may include one or more sub-keys, such that the (e.g., security anchor) key is not directly derived from the long-term key. A key directly derived from a key which in turn is directly derived from the long-term key is, for the skilled person, obviously also derived from the long-term key. The number of steps (e.g. further derivations) involved in the derivation is irrelevant for the fact that one key is derived from another. An advantage may be flexibility in enabling different access policies for direct interaction with the long-term key and sub-keys.

The processor further derives, based on the (e.g., security anchor) key, the plurality of encryption and/or integrity protection keys. The storage may securely retain the long-term key, while the processor uses it to generate context-specific keys. An advantage may be the hierarchical key derivation, which ensures security while reducing the risk of key misuse.

According to some embodiments, the storage is further configured to store a plurality of long-term keys, each associated with a different network area or trust domain of the telecommunication system. The processing module is configured to derive, from each long-term key, a corresponding (e.g., security anchor) key, and derive encryption and integrity protection keys specific to NAS security contexts and/or UP flows for the associated network area or trust domain. The ability to store multiple long-term keys may enable trust domain separation. Each network area may operate with independent keys, enhancing segmentation. An advantage may be improved trust management and reduced risks in multi-operator or multi-slice networks. Such a setup enables a secure network deployment in which different parts of the network are managed by different entities, such as hybrid private networks where mobility is centrally managed by a public operator and session management is independently managed by a third party. In such a case, it is possible to use a separate long-term key for the public operator and the third party.

According to some embodiments, the processor is further configured to maintain a plurality of cryptographic state machines, each associated with a specific NAS security context and/or UP flow. The processor is further configured to map NAS and/or UP traffic to a corresponding cryptographic state machine based on a specific CP entity, a NAS container type, or an SMF managing the User Plane flow. The cryptographic state machines may ensure context-specific encryption and integrity. Traffic mapping may assign the correct state machine to the appropriate security context or flow. An advantage may be robust synchronization between NAS and UP contexts for secure communication.

According to some embodiments, the communication interface is further configured to signal, to the CN or access network (AN) of the telecommunication system, the UE's capabilities regarding at least one of: a number of parallel security contexts the UE can manage; cryptographic algorithms supported by the UE; a number of long-term keys supported or configured in the UE; and types and number of encryption and integrity protection keys the UE can manage. Capability signaling may ensure that the network adapts its operations to the UE's capacity, optimizing key generation and security context management. An advantage may be efficient resource allocation and enhanced compatibility with diverse UEs, as well as enabling service for low-complexity UEs in parallel to high-performance UEs.

According to some embodiments, the communication interface is configured to signal the UE's capabilities during an initial registration procedure, a re-registration event, a PDU session establishment or a PDU session modification. The signaling may occur during critical network operations, ensuring that the CN has up-to-date information about the UE's capabilities. An advantage may be its seamless and efficient initialization or reconfiguration of security contexts.

According to some embodiments, the communication interface is further configured to include the UE's capability information in NAS signaling messages and protect the capability information using integrity protection and encryption. Capability information may be secured against unauthorized access or tampering through encryption and integrity protection. An advantage is maintaining the confidentiality and authenticity of sensitive capability data.

According to some embodiments, a method for a UE for use in a telecommunication system is proposed. The method comprises deriving, from a long-term key shared with a CN of the telecommunication system, a plurality of encryption and/or integrity protection keys for a plurality of NAS security contexts and/or UP flows. The method further comprises establishing secure communication for each of the NAS security contexts and/or UP flows using the respective associated encryption and integrity protection keys. The method may ensure that key derivation and secure communication are implemented consistently across the NAS and UP layers. An advantage may be ensuring a systematic approach to key generation and usage, improving the security and reliability of UE operations.

The method may be computer-implemented. Thus, embodiments also comprise a computer program having program code which, when executed by a UE or another programmable hardware device, causes the UE to derive, from a long-term key shared with a core network (CN) of the telecommunication system, a plurality of encryption and/or integrity protection keys for a plurality of NAS security contexts and/or UP flows. The program code further causes the UE to establish secure communication for each of the NAS security contexts and/or UP flows using the respective associated encryption and integrity protection keys. The computer program may be stored on a non-transitory computer-readable medium, such as memory or storage accessible by the UE, and ensures that the key derivation and secure communication processes are implemented consistently and systematically across the NAS and UP layers.

According to a further aspect of the present disclosure, a control plane (CP) and/or user plane (UP) entity in a telecommunication system is proposed. The CP and/or UP entity comprises a processor configured to derive, based on a (e.g., security anchor) key, at least one encryption key and at least one integrity protection key specific to a NAS security context and/or UP flow associated with a user equipment (UE). The CP and/or UP entity further comprises a communication interface configured to establish encrypted and/or integrity-protected communication with the UE using the derived encryption and integrity protection keys specific to the NAS security context and/or UP flow. The processor may derive context-specific keys to secure communication for each NAS or UP context. The communication interface may use the derived keys to ensure confidentiality and integrity in UE communication. An advantage may be enhanced segmentation of keys for secure and isolated communication.

According to some embodiments, the processor is configured to derive a CP and/or UP entity-specific key from the (e.g., security anchor) key and derive the encryption and integrity protection keys for communication with the UE from the CP and/or UP entity-specific key. The use of an entity-specific key may ensure that encryption and integrity protection keys are cryptographically separated for each CP and/or UP entity. An advantage may be secure key isolation between entities such as the AMF, SMF, and PCF, reducing the risk of cross-entity compromise.

According to some embodiments, the communication interface configured is configured to forward the derived CP/UP entity-specific key from the CP/UP entity to another CP/UP entity. The latter can use the forwarded CP/UP entity-specific key as an anchor key for deriving a CP/UP entity-specific key specific to the other CP/UP entity.

According to some embodiments, the processor is further configured to derive, from the CP and/or UP entity-specific key, a plurality of keys for securing the UP, including an encryption key for encrypting UP data and an integrity protection key for ensuring the integrity of UP data. The derivation of multiple UP-specific keys may enable fine-grained security for data transmission over the user plane. An advantage may be that each UP flow can be independently secured.

According to some embodiments, the processor is configured to derive encryption and integrity protection keys specific to NAS security contexts and/or UP flows based on unique identifiers, including a CP and/or UP entity identifier, a specific PDU session identifier, or a NAS container type. This may ensure that each key is tied to a unique identifier, such as a specific PDU session or NAS message type. An advantage may be precise key assignment and secure handling of multiple NAS and UP flows in distributed network scenarios.

According to some embodiments, the communication interface is configured to handle multiple NAS security contexts and/or UP flows simultaneously, with each context or flow being associated with a different set of encryption and integrity protection keys. The ability to manage multiple contexts and flows in parallel may allow the CP and/or UP entity to support complex multi-session operations. An advantage may be improved scalability and efficiency in networks with distributed NAS and UP configurations.

According to some embodiments, the processor is further configured to maintain a cryptographic state machine, each associated with a specific NAS security context and/or UP flow. The cryptographic state machine is associated with a specific set of encryption and integrity protection keys derived for the NAS security context and/or UP flow and a set of counters and algorithm-specific parameters used to ensure synchronization between the CP and/or UP entity and the UE. The state machine may maintain synchronization for encryption and/or integrity across contexts, ensuring accurate cryptographic operations. An advantage may be reduced risk of desynchronization errors, which may otherwise end up resulting into a loss of connectivity, enhancing reliability and security in distributed communication environments.

According to some embodiments, the communication interface is configured to inform the UE which long-term key to use for deriving the (e.g., security anchor) key. The CP and/or UP entity may direct the UE to use a specific long-term key, ensuring proper key alignment for security contexts. An advantage may be efficient management of trust domains and multi-operator configurations.

According to some embodiments, the CP and/or UP entity is one of the group of AMF, SMF, PCF or UPF. This may cover major CP and UP entities responsible for key management and secure communication. An advantage may be comprehensive applicability to various network functions in the telecommunication system.

According to a further aspect, a method for a CP and/or UP entity in a telecommunication system is proposed. The method comprises deriving, based on a (e.g., security anchor) key, at least one encryption key and at least one integrity protection key specific to a NAS security context and/or UP flow associated with a UE. The method further comprises establishing encrypted and/or integrity-protected communication with the UE using the derived encryption and integrity protection keys specific to the NAS security context and/or UP flow. The method may ensure that key derivation and secure communication are systematically applied across NAS and UP contexts. An advantage may be reliable and consistent implementation of cryptographic protections, enabling robust security for modern telecommunication systems.

This method may be computer-implemented. Thus, embodiments also comprise a computer program having program code which, when executed by a CP and/or UP entity in a telecommunication system, causes the entity to derive (e.g., based on a security anchor key) at least one encryption key and at least one integrity protection key specific to a NAS security context and/or UP flow associated with a UE. The program code further causes the CP and/or UP entity to establish encrypted and/or integrity-protected communication with the UE using the derived encryption and integrity protection keys specific to the NAS security context and/or UP flow. The computer program may be stored on a non-transitory computer-readable medium, such as a storage device or memory accessible by the CP and/or UP entity.

According to a further aspect of the present disclosure, a key derivation entity for managing key generation in a telecommunication system is proposed. The key derivation entity comprises a key derivation processor configured to derive a (e.g., security anchor) key from a long-term key shared with a UE. The key derivation entity further comprises a communication interface configured to distribute the derived (e.g., security anchor key) to and/or via a plurality of CP and/or UP entities. Thus, the key derivation processor may generate the (e.g., security anchor) key, which is then distributed to network entities responsible for securing communication. This may enable centralized key management, reducing complexity in distributed environments. An advantage may be efficient and consistent generation and distribution of cryptographic keys across the network.

According to some embodiments, the key derivation processor is configured to derive the (e.g., security anchor) key using an authentication and key agreement (AKA) protocol, based on information exchanged between the UE and a core network of the telecommunication system. Using the AKA protocol may ensure that the derived (e.g., security anchor) key is tied to a secure authentication process. This may enhance the trustworthiness of the generated keys. An advantage may be a robust cryptographic linkage between the UE and the network, improving security.

According to some embodiments, the key derivation processor is further configured to update the (e.g., security anchor) key and/or related keys such as for CP and/or UP entities periodically or in response to changes in network conditions or UE mobility events. Regular updates or event-driven key regeneration may ensure that the key remains fresh and secure, even in dynamic network conditions. An advantage may be an enhanced resilience against replay attacks and key compromise, maintaining strong security in mobility scenarios.

According to some embodiments, the communication interface is configured to encapsulate key derivation messages in NG-AP containers for transmission to a RAN node. Encapsulating key derivation messages in NG-AP containers may leverage existing communication protocols for efficient and secure transmission. An advantage may be reduced signaling overhead and seamless integration with current 5G RAN architectures.

According to some embodiments, the communication interface is configured to encapsulate key derivation messages in HTTP messages for transmission via a RAN node. The use of HTTP encapsulation may ensure compatibility with web-based communication frameworks and may facilitate flexible integration with RAN nodes. An advantage may be an adaptability of the system to heterogeneous network deployments, enhancing flexibility.

According to some embodiments, the communication interface is configured to indicate to the UE or the core network which long-term key to use for a specific NAS security context or UP flow. The ability to specify the appropriate long-term key may ensure proper key usage for different security contexts or flows. An advantage may be improved trust domain segmentation, aligning key usage with specific contexts, reducing risks of misuse or overlap.

According to some embodiments, the communication interface is configured to distribute the (e.g., security anchor) key to at least one CP and/or UP entity for deriving encryption and integrity protection keys specific to a NAS security context and/or UP flow associated with a UE. By distributing the (e.g., security anchor) key to CP and/or UP entities, the system may ensure that context-specific keys can be derived for secure communication. An advantage may be centralized key generation with distributed context-specific security, improving scalability.

According to some embodiments, the communication interface is configured to forward control plane signaling for key derivation between the key derivation entity and one or more CP and/or UP entities using an access network function (ANF). Forwarding key derivation signaling through an ANF may utilize existing network infrastructure to facilitate efficient key distribution. An advantage may be an elimination of direct connectivity requirements between the key derivation entity and CP/UP entities, enhancing network flexibility.

According to a further aspect, a method for key generation in a mobile communication system is proposed. The method comprises deriving a (e.g., security anchor) key from a long-term key shared with a UE. The method further comprises distributing the derived (e.g., security anchor) key to and/or via a plurality of CP and/or UP entities. The method may ensure systematic derivation and distribution of (e.g., security anchor) keys, supporting multiple NAS and UP security contexts. An advantage may be a standardized approach to secure key management, enabling consistent and reliable cryptographic operations across the network.

This method may be computer-implemented. Thus, embodiments also comprise a computer program having program code which, when executed by a key generation entity in a mobile communication system, causes the entity to derive a security anchor key from a long-term key shared with a UE. The program code further causes the entity to distribute the derived security anchor key to and/or via a plurality of CP and/or UP entities. The computer program may be stored on a non-transitory computer-readable medium, such as a memory or storage device accessible by the key generation entity.

According to a further aspect of the present disclosure, a telecommunication system for managing NAS security contexts and/or UP flows is proposed. The system comprises a key derivation entity configured to derive a (e.g., security anchor) key from a long-term key shared with a UE. The key derivation entity is further configured to distribute the derived (e.g., security anchor) key to and/or via a plurality of CP and/or UP entities. The system further comprises one or more CP and/or UP entities, each configured to derive, based on a (e.g., security anchor) key, at least one encryption key and at least one integrity protection key specific to a NAS security context and/or UP flow associated with a UE. Each CP and/or UP entity is further configured to establish secure communication with the UE using the derived encryption and integrity protection keys specific to the NAS security context and/or UP flow. The system may provide centralized key generation via the key derivation entity and distributed key usage by CP and UP entities. This approach may support secure communication across multiple contexts and flows in a distributed architecture. An advantage may be consistent and scalable key management for enhanced security and flexibility in advanced telecommunication networks.

According to some embodiments, the telecommunication system further comprises a UE configured to derive, from the long-term key shared with a CN of the telecommunication system, a plurality of encryption and/or integrity protection keys for a plurality of NAS security contexts and/or UP flows. The UE is further configured to establish secure communication with the one or more CP and/or UP entities for each of the NAS security contexts and/or UP flows by using the respective associated encryption and integrity protection keys. The UE may generate keys aligned with specific contexts and flows, ensuring end-to-end security for NAS and UP communication. This approach may enable dynamic key generation tailored to diverse communication needs. An advantage may be a robust protection of signaling and user data across different network functions and services.

Embodiments of the present disclosure may offer several advantages, primarily enhancing the security and scalability of telecommunication systems. By enabling hierarchical key derivation, embodiments may ensure robust encryption and integrity protection tailored to specific NAS security contexts and user plane flows, reducing the risk of vulnerabilities affecting multiple connections. Embodiments may support for multiple long-term keys allows the segmentation of security contexts across different network areas or trust domains, providing greater flexibility for diverse deployment scenarios.

Embodiments of the present disclosure may facilitate efficient key management for simultaneous flows, improving the system's ability to handle complex, distributed architectures such as those seen in 5G and beyond. Embodiments may reduce communication overhead by enabling intermediate network functions to derive context-specific keys locally, minimizing reliance on centralized entities. Furthermore, embodiments may support dynamic synchronization through cryptographic state machines, ensuring secure communication even in rapidly changing network conditions. Overall, embodiments may enhance modularity, scalability, and the security of next-generation communication systems.

### Brief description of the Figures

Some examples of apparatuses and/or methods will be described in the following by way of example only, and with reference to the accompanying figures, in which
- Fig. 1A: illustrates a high-level architecture of a 5G system;
- Fig. 1B: illustrates a more detailed representation of the 5G system architecture;
- Fig.2: illustrates a protocol stack for SBI in a 5G network;
- Fig.3: illustrates a 5G system architecture in the context of a roaming scenario;
- Fig.4: illustrates a concept of disaggregated NAS architecture;
- Fig.5A,B: illustrate deployment scenarios with the being the primary point for CP signaling;
- Fig.6: provides an overview of a key derivation process according to embodiments;
- Fig. 7: shows an enhanced key hierarchy for secure communication in a telecommunication system by introducing the generation of multiple sub-keys tailored for individual NAS CP entities;
- Fig. 8: illustrates a key management topology according to an embodiment;
- Fig. 9: illustrates the concept of disaggregated NAS security according to embodiments;
- Fig. 10A: illustrates a scenario in which a CP entity, for example AMF, handles multiple NAS security contexts with the UE simultaneously;
- Fig. 10B: illustrates a case where a single AMF provides multiple NAS endpoints;
- Fig. 10C: showing a generation of multiple AMF-specific keys;
- Fig. 11: illustrates a modified approach for CP, in which the SEAF communicates with a SMF through a gNodeB;
- Fig. 12: illustrates a generation of multiple UP-specific encryption and integrity keys, tied to individual SMFs;
- Fig. 13: shows a scenario in which UP traffic is independently secured between UPFs belonging to different trust domains;
- Fig. 14: shows a state machine of a UE or CN entity for switching between different security contexts;
- Fig. 15: illustrates multiple key derivation branches based on different long-term keys;
- Fig. 16: illustrates a simplified CP topology in a telecommunication system that supports the use of multiple long-term keys; and
- Fig. 17: illustrates an example case for horizontal key derivation.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

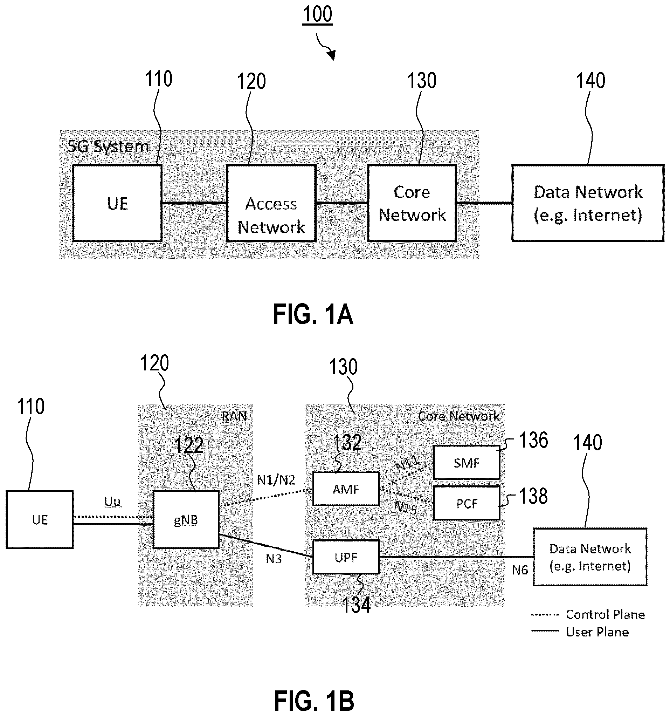

The current paradigm divides the mobile network in two main parts: Access Network (AN) and Core Network (CN). **Fig. 1A** illustrates a high-level architecture of a 5G system 100, including high-level network components and their interconnections.

Fig. 1A shows a UE 110, a RAN 120, a CN 130, and a Data Network (DN) 140, such as the Internet. The UE 110, which can include devices like smartphones, loT sensors, or connected vehicles, provides users with connectivity to the network 100. It may establish a wireless connection with the RAN 120, which may act as a bridge between the user devices and the CN infrastructure. The communication between the UE 110 and the RAN 120 may occur over a 5G New Radio (NR) interface, which may provide high-speed, low-latency connectivity and efficient spectrum utilization.

RAN 120 may comprise base stations, typically referred to as gNodeBs, which may handle functions such as radio resource management, data transmission, and enforcing quality of service parameters. RAN 120 may connect to CN 130 through standardized interfaces, such as the NG interface, enabling seamless data flow and session continuity as users move across coverage areas.

CN 130, which may form a backbone of the 5G system 100, is responsible for functions such as authentication, mobility management, and session management. It may orchestrate efficient routing of traffic to and from the DN 140 while maintaining secure and reliable communication. Within the CN 130, various functional components such as the Access and Mobility Management Function (AMF), the Session Management Function (SMF), and the User Plane Function (UPF) may collaborate to manage signaling, control, and data transmission effectively. In real-world deployments, network functions such as the AMF, the SMF, and the UPF may be implemented as software-based, virtualized network functions running on commercial hardware or specialized network appliances. This virtualization is made possible through technologies such as Network Functions Virtualization (NFV) and Software-Defined Networking (SDN), which allow network operators to deploy, scale, and manage these functions flexibly and efficiently. As such, network functions within a network may be composed of Physical Network Functions (PNFs), Virtual Network Functions (VNFs) and/or Cloud-Native Network Functions (CNFs). CN 130 may also support advanced features such as network slicing, which may allow the logical partitioning of network resources to cater to diverse use cases and service requirements.

DN 140, representing external systems such as the Internet, enterprise networks, or cloud services, may connect to CN 130 through established interfaces. It may facilitate the delivery of content, applications, and services to UE 110, completing the end-to-end communication pathway.

The objective of this 5G architecture is to provide the UE 110 with connectivity towards DN 140. Going in more detail, the UE 110 communicates with the RAN 120 via a radio interface, which is used for conveying both signaling information and data traffic. Even if there is a logical separation (logical channels), for obvious reasons both types of data end up being transmitted over the same physical medium. Between the RAN 120 and the CN 130, signaling information and user data may be separated in different interfaces: N1/N2 and N3 in the 5G case, the former running on a SCTP/NG-AP/NAS protocol stack and the latter running on a UDP/GTPU-U protocol stack. This is illustrated in **Fig. 1B****.**

Fig. 1B provides a more detailed representation of the 5G system architecture 100, emphasizing interfaces and network components involved in connecting the UE 110 to the DN 140. It shows some key elements of the 5G RAN 120 and CN 130 and illustrates a separation of the control plane (CP) and user plane (UP) within the network. This representation expands upon Fig. 1A by including explicit protocol stacks and specific network functions, providing a more granular view of the architecture.

In Fig. 1B, the UE 110 communicates with the RAN 120 through the Uu interface, which supports both signaling and user data. The RAN 120 is represented by a gNodeB (gNB) 122, which may manage communication between the UE 110 and the CN 130. It uses distinct interfaces for control and user planes. The N1 and N2 interfaces link the gNB 122 to an AMF 132 in the CN 130 for control signaling. These interfaces operate on a protocol stack comprising SCTP, NG Application Protocol (NG-AP), and Non-Access Stratum (NAS). Conversely, user data is transmitted via the N3 interface, connecting the gNB 122 to a UPF 134 through a stack utilizing UDP and GTP-U.

The CN 130 depicted in Fig. 1B is segmented into control plane (CP) and user plane (UP) functions, with the AMF 136 handling mobility and access management in conjunction with a SMF 136 and Policy Control Function (PCF) 138. The AMF 132 communicates with the SMF 136 using N11 for session management signaling and with the PCF 138 through N15 for policy control. This separation aligns with the 5G architecture's service-based design, allowing modular and flexible management of network functions.

The UPF 134 is dedicated to processing and routing user data between the gNB 122 and the DN 140 via the N6 interface. This architecture reflects the 5G system's decoupling of control and user planes, optimizing both efficiency and scalability. Finally, the DN 140 serves as the destination for user traffic, which can include Internet access or private services.

In order to establish a data connection enabling the UE 110 to communicate with the DN 140, a PDU session is required. A PDU session is a logical data transport channel terminated at the CN 130 that provides connectivity to the DN 140. The termination point of a given PDU session (UPF 134 in Fig. 1B and how it works in 5G) is termed PDU Session Anchor (PSA).

CP signaling between the UE 110 and the CN 130 is based on the NAS protocol. While the NAS protocol is typically defined as terminated at the AMF 132, there are some nuances to this statement. The NAS protocol for 4G/EPC was reused and extended. NAS exchanges standard L3 messages. 5G-NAS is an evolution of 4G-NAS and also defines the information element coding in the specification. The path chosen for 5G was to terminate NAS security at a common point and disaggregate the MME functionality.

AMF 132 terminates NAS security for all NAS of the UE 110 and processes Mobility Management (MM). For other functions, it forwards NAS payloads over SBI to other NFs: SMF 136 for Session Management (SM), SMSF for SMS, PCF 138 for policy, or GMLC for location. SBI refers to Service Based Interface. It uses the Service Based Architecture (SBA) 5GC Control Plane (CP) Architecture. SBIs use a newly-defined protocol stack. Instead of GTP-C, it is now based on HTTP/2, which provides some advantages compared to prior versions of the HTTP protocol. NAS information is transported in SBI messages by including the NAS binary container as a MIME multipart payload, which can be combined together with a JSON body.

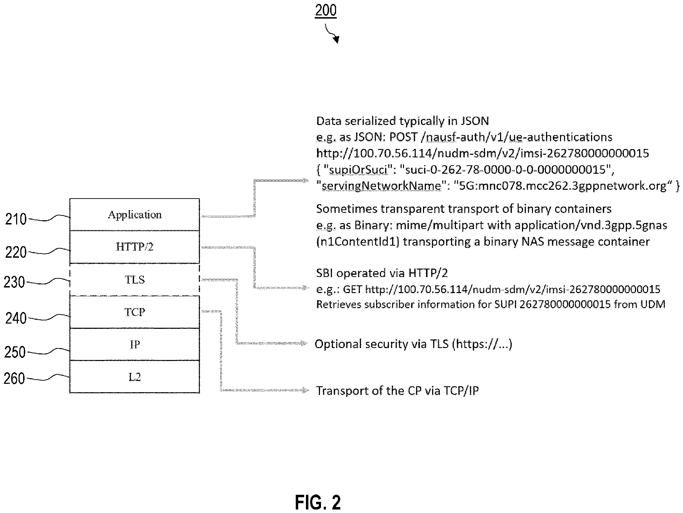

**Fig. 2** illustrates a protocol stack 200 for the SBI in a 5G network, showing each layer and its functionality in facilitating communication between NFs. This protocol stack enables the exchange of information in a standardized, secure, and efficient manner within the 5G Core Network.

At the top of the stack 200 is the Application Layer 210, which represents the actual services and functions provided by the 5G network. Data at this layer 210 may be serialized in JSON format, a lightweight data-interchange format that is easy to read and write, as well as human-readable. JSON may be used to structure the messages exchanged between network functions. For example, an HTTP POST request to NRF or UDM might include JSON-formatted data, such as subscriber information or authentication parameters. The example provided in Fig. 2 shows a POST request to the /nausf-auth/v1/ue-authentications endpoint with JSON data containing fields like "supiOrSuci" (subscriber identity) and "servingNetworkName" (the network name). Additionally or alternatively, other payload types can be transported, such as a vnd.3gpp.5gnas binary payload transporting a NAS message. This layer is where business logic resides, defining how the network functions interact with each other through APIs and protocols.

Beneath the application layer 210 is HTTP/2 220, a protocol used for communication between NFs over the SBI. HTTP/2 is a major revision of the original HTTP protocol and introduces features like multiplexing, header compression, and stream prioritization, which enhance the efficiency of data exchange. HTTP/2 allows multiple requests and responses to be sent simultaneously over a single connection, reducing latency and improving overall network performance. The SBI in 5G networks operates primarily over HTTP/2, using methods like GET and POST to retrieve or update network function information. For instance, an HTTP GET request might be used to retrieve subscriber information from UDM 118 using a specified URI. HTTP/2 provides the necessary flexibility and performance enhancements to support the high demand and real-time nature of 5G services.

A Transport Layer Security (TLS) layer 230 may provide an optional security mechanism to ensure the confidentiality, integrity, and authenticity of data transmitted over the network. TLS is a cryptographic protocol designed to provide secure communication over a computer network, using encryption to protect data from eavesdropping and tampering. In the context of the SBI, TLS is used to secure the HTTP/2 communication channel, ensuring that sensitive information exchanged between network functions, such as authentication details and subscriber data, is protected against unauthorized access. By encrypting the data in transit, TLS helps maintain the privacy and security of the network's operations. This layer is optional, but its use is highly recommended, especially for sensitive communications involving personal or subscriber information. In SBI, mutual TLS (mTLS) is employed, in which both ends of the communication provide certificates, such that the identity of both can be verified.

Below TLS 230 is a Transmission Control Protocol (TCP) layer 240. TCP is a core protocol of the Internet Protocol (IP) suite, providing reliable, ordered, and error-checked delivery of a stream of data between applications. In the context of the 5G network, TCP is responsible for establishing a connection between communicating entities, managing the flow of data, and ensuring that data packets are delivered accurately and in the correct order. TCP segments the data into smaller packets, transmits them to the receiving network function, and reassembles them into the original message. This layer is important for SBI as it provides a dependable transport mechanism, ensuring that the data exchange between network functions is consistent and error-free.

An Internet Protocol (IP) layer 250 may be responsible for routing the data packets across the network. IP is a network layer protocol that defines the addressing scheme and routing process for the data as it travels through the network. In the 5G core network, IP may ensure that the packets are directed to the correct destination based on their IP addresses. Each network function, such as AMF 134, SMF 136, or NRF (Network Repository Function), may be assigned an IP address, allowing data to be transmitted across the network efficiently. IP handles packet forwarding, fragmentation, and reassembly, facilitating the movement of data across various network segments.

At the base of the stack is the Layer 2 (L2) 260, which represents the data link layer in the OSI model. L2-layer 260 may be responsible for the direct, node-to-node transfer of data between network devices. It provides the means for data to be transmitted over a physical link, such as Ethernet or a wireless link. L2 ensures that the data frames are transmitted to the next node in the network path, providing error detection and correction at the data link level. This layer is important for the actual transport of data over the physical medium, facilitating the movement of data frames between network functions and ensuring that higher-layer protocols can communicate seamlessly.

NAS payloads forwarded by the AMF 132 towards other NFs may be sent unencrypted. The SBI message between the AMF 132 and the other NFs may be encrypted, but this amounts to a hop-by-hop encryption of the NAS messages.

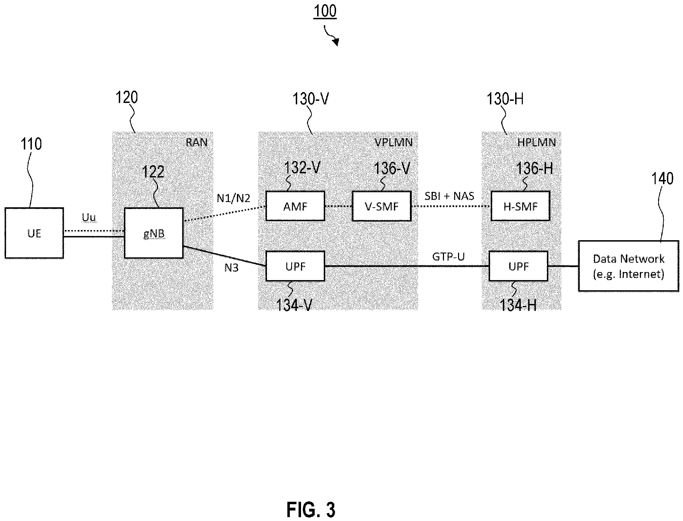

**Fig. 3** illustrates a 5G system architecture 100 in the context of a roaming scenario, where the UE 110 accesses the DN 140 through a Visited Public Land Mobile Network (VPLMN) 130-V and a Home Public Land Mobile Network (HPLMN) 130-H. The Security Edge Protection Proxy (SEPP) between PLMNs is excluded for clarity, although typical deployments may include SEPPs for securing the communication between the PLMNs. Fig. 3 highlights how control and user plane data traverse between networks and the roles of various network functions in this setup. It builds upon the architecture from Fig. 1B by including roaming-specific components and illustrating the cross-network communication flow. Additionally, when establishing a PDU session while in roaming, there is NAS protocol data that traverses a Public Land Mobile Network (PLMN) boundary, with the V-SMF 136-V including a NAS binary container in the HTTP service operation PDU session establishment between V-SMF 136-V and H-SMF 136-H.

In this scenario, the UE 110 connects to the RAN 120 in the visited network through the Uu interface. The gNB 122 in the RAN 120 manages communication with both the CN in the VPLMN 130-V and indirectly with the CN in the HPLMN 130-H. The N1/N2 interface links the gNB 122 to the AMF 132-V within the VPLMN 130-V, allowing control signaling. For user data, the N3 interface connects the gNB 122 to the UPF 134-V in the VPLMN 130-V, ensuring efficient data routing within the visited network.

The AMF 132-V in the VPLMN 130-V interacts with the Visited Session Management Function (V-SMF) 136-V to manage session establishment and mobility. When a PDU session is established, the V-SMF 136-V communicates with the Home Session Management Function (H-SMF) 136-H in the HPLMN 130-H. This communication occurs over the Service-Based Interface (SBI), with NAS payloads encapsulated within HTTP service operations. While SBI messages may be encrypted on a hop-by-hop basis, the NAS payloads themselves may remain unencrypted as they may be forwarded by the AMF 132-V to other network functions. It is hence only possible for the UE to ascertain that it is communicating with the AMF 132-V. Any NAS communication beyond AMF 132-V is considered trusted by the UE 110. This approach facilitates efficient protocol handling while maintaining separation of control signaling responsibilities between the visited and home networks.

The UP data flow follows a distinct path compared to control signaling. In the VPLMN 130-V, the local UPF 134-V handles the initial processing of user data. Subsequently, user plane traffic traverses the boundary between the VPLMN 130-V and the HPLMN 130-H, reaching the UPF 134-H in the home network through a GTP-U tunnel. This configuration allows the home network to enforce policies and manage resources while providing seamless connectivity for the roaming UE 110.

In comparison to Fig. 1B, Fig. 3 introduces the VPLMN and HPLMN separation, illustrating how 5G roaming is implemented. It emphasizes the interplay between the V-SMF 136-V and H-SMF 136-H, which is absent in simpler non-roaming scenarios. The inclusion of cross-PLMN interfaces, such as the SBI for control signaling and GTP-U for user data, demonstrates the additional complexity of maintaining efficient and secure communication in roaming cases. This architecture ensures that the home network retains control over session management and policy enforcement, even as the UE operates in a visited network.

The encryption of the NAS security context is based on a K_{NASenc} encryption key, which is generated at both the UE 110 and the network. This key is derived from a long-term key K, which is stored at securely at both ends of the chain (UE 110 and CN 130). The derivation process includes several intermediate keys, such as K_{SEAF} and K_{AMF}. At the UE 110, K may be stored at the USIM (Universal Subscriber Identity Module), whereas an operator may store such a key at an Authentication Credential Repository and Processing Function (ARPF), for example. The long-term key is the shared secret from which many other (sub-)keys may be derived at both ends and hence it may be stored protected via hardware means. Both the USIM and ARPF are typically hardware-protected, such as implemented by means of a Hardware Security Module (HSM) to ensure tamper-proof and the impossibility to extract stored keys. Rather, instead of outputting K itself, the HSM exposes derived data, such as Authentication Vectors (AVs), such that the key can never be accessed directly.

At the top of the hierarchy, the long-term key K (root key) may be generated for the HPLMN and may be securely configured on the UE's 110 USIM during a production process. The K key may form a foundation for the derivation of subsequent keys. From K, a Cipher Key (CK) and Integrity Key (IK) may be derived during the execution of authentication protocols like 5G AKA or EAP-AKA'. These keys may be stored securely within the UE 110 and the Unified Data Management/Authentication Credential Repository and Processing Function (UDM/ARPF) in the network.

A next layer of the hierarchy may involve a derivation of an Anchor Key (K_{AUSF}) by the Authentication Server Function (AUSF). The AUSF may calculate K_{AUSF} based on CK and IK, using secure algorithms. K_{AUSF} may then be passed to the Security Anchor Function (SEAF), which resides in a Serving Network. The SEAF may derive an intermediate key K_{SEAF}, which is important for establishing security contexts between the UE and the Serving Network.

From K_{SEAF}, the AMF 132 may derive an Access Management Key (K_{AMF}). This key may be pivotal for managing NAS signaling protection. K_{AMF} may be used to generate further keys, such as K_{NASint} and K_{NASenc}, which provide integrity and confidentiality protection for NAS messages, ensuring secure signaling between the UE 110 and the AMF 132. Further down the hierarchy, the AMF 132 may use K_{AMF} to derive keys for Radio Resource Control (RRC) and user plane protection. Keys like K_{RRCint} and K_{RRCenc} are responsible for the integrity and encryption of RRC messages, while K_{UPint} and K_{UPenc} secure the user plane data. The gNodeB (gNB) 122 and the UE 110 may utilize these keys to maintain secure communication over the air interface.

In addition to K_{NASenc}, the 5GS also supports K_{NASint}, which is used for integrity protection of NAS messages between the UE 110 and the AMF 132. Similarly to how the other keys are derived, although for a quite different use case, K_{UPenc}, K_{UPint}, are used for encryption and integrity protection respectively of the UP between gNB 122 and UE 110. The different keys are derived using parameters generated and/or exchanged during the UE registration, and hence cannot be pre-generated. TS 33.501 defines how the different (sub-) keys are (regenerated based on (ultimately) the long-term key, as well as additional, dynamic, parameters.

Once generated with direct (or indirect) interaction with information generated from K, generated keys may be stored in elements other than the ARPF/USIM. The reason being that the generated sub-keys cannot be used to derive K. UP encryption is based on a key associated with a given AMF, K_{AMF} and hence tied/related to the key derivation for NAS security. NAS encryption and integrity protection keys K_{NASenc,}, K_{NASint}, are derived from K_{AMF}. K_{AMF} is updated using the NAS message sequence counter, which means that per AMF instance, only one NAS security context can exist. Keys for more than one security context can be derived from the K_{SEAF} without the need of a new authentication run. A concrete example of this is that an authentication run over a 3GPP access network can also provide keys to establish security between the UE and a N3IWF used in untrusted non-3GPP access.

One of the optimizations that has the potential to be implemented in 6G is that of the disaggregation of the AMF 132. That is, to replace the AMF's function as a single point of termination for the NAS protocol and NAS security context, such that the UE 110 is capable of directly communicating with multiple CP entities. For that, a UE 110 would need to establish multiple security contexts, among other issues. The most important aspect of NAS disaggregation would be a real separation between Access & Mobility (AM) and Session Management (SM). In current mobile networks, AM and SM are intertwined by virtue of the AMF 132 being the NAS termination point. A switch to a disaggregated NAS on network side would enable more flexible deployments in 6G, as shown in available references and state of the art.

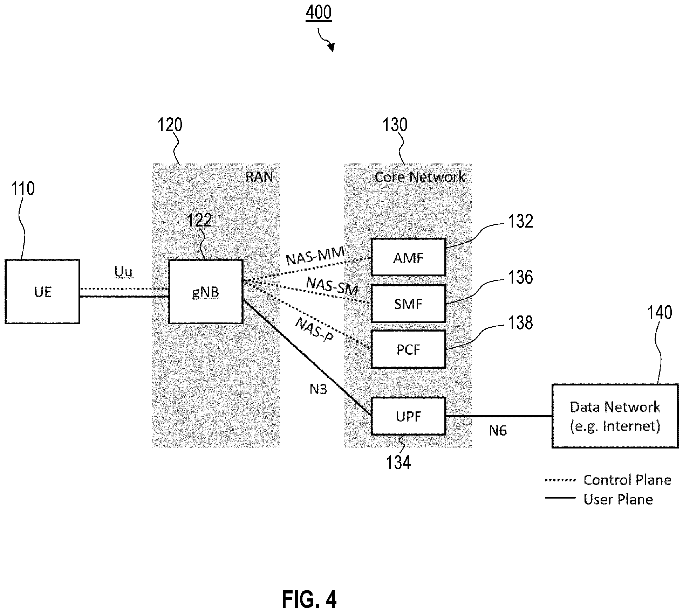

**Fig. 4** illustrates a concept of disaggregated NAS architecture 400, where the UE 110 can establish multiple security contexts with distinct network functions through the gNodeB (gNB) 122. This contrasts with the traditional centralized NAS architecture seen in current 5G networks, in which a single security context is managed by the AMF 132. Here, the separation of NAS functionalities enables the UE 110 to independently establish and manage security contexts for different control plane entities, paving the way for more flexible and distributed network designs.

In the architecture shown in Fig. 4, UE 110 would be configured to derive, from a long-term key (K) shared with the CN 130 of the telecommunication system 400, a plurality of encryption and/or integrity protection keys for a plurality of NAS security contexts and/or UP flows, and establish encrypted and/or integrity-protected communication for the plurality of NAS security contexts and/or UP flows using one or more of the keys. That is, the derived keys are used to secure different NAS security contexts and/or user plane UP flows. The process enables the UE 110 to establish and maintain secure communication for multiple simultaneous sessions or contexts within the network without the current dependency of CP/U P security on K_{AMF}.

UE 110 may be equipped with one or more processors, memory, and communication interfaces to perform the tasks required for deriving encryption and integrity protection keys, managing multiple NAS security contexts and/or UP flows, and establishing secure communication with the CN 130. The processors in the UE 110 may be responsible for executing the necessary algorithms and protocols to derive the keys from the shared long-term key. They may handle cryptographic operations, including the key derivation processes and the initialization and maintenance of cryptographic state machines for each NAS security context or user plane flow. These processors may be designed to efficiently handle the computational complexity of such operations while ensuring minimal impact on the UE's performance. The memory in the UE 110 may store the long-term key shared with the CN 130 and other security-related information, including derived keys, cryptographic state machine parameters, and counters. This memory may also retain configuration data necessary for associating keys with specific contexts or flows. By securely storing this data, the UE 110 ensures the integrity and confidentiality of the key management process. The communication interfaces may enable the UE 110 to interact with the CN 130 and the RAN 120. These interfaces may handle the exchange of signaling messages for setting up security contexts, managing keys, and maintaining synchronization between the UE 110 and network entities such as the AMF, SMF, or UPF. The communication interfaces may also be responsible for transmitting and receiving encrypted and integrity-protected data in both the control and user planes, ensuring secure communication with the network.

In the architecture shown in Fig. 4, the UE 110 communicates with the RAN 120 via the Uu interface, connecting to the gNB 122, which acts as a bridge to the CN 130. Through this connection, the UE 110 may establish separate NAS security contexts for specific network functions. A NAS mobility management (NAS-MM) security context may be established with the AMF 132, ensuring secure handling of mobility and access-related signaling. Simultaneously, a NAS session management (NAS-SM) security context may be set up with the Session Management Function (SMF) 136, enabling the secure establishment, modification, and release of data sessions. Additionally, a NAS policy management (NAS-P) security context may be established with the Policy Control Function (PCF) 138, allowing secure communication for enforcing policies and quality of service (QoS) requirements. A UP security context may be established with the UPF 134. The gNB may route user plane traffic over the N3 interface to the UPF 134, which manages data transport to and from the DN 140 via the N6 interface.

The disaggregated NAS architecture shown in Fig. 4 reflects a potential evolution of the existing 5G design. By decoupling NAS-MM, NAS-SM, NAS-P, and UP functionalities, it introduces modularity that supports independent scaling and optimized resource allocation for each network function. This design may be a steppingstone for 6G networks, where such disaggregation could enable innovative deployments, dynamic network slicing, and support for diverse application scenarios. However, the disaggregated approach also introduces challenges, including the need for the UE to manage multiple independent security contexts, which adds complexity to protocol operations and requires robust synchronization mechanisms across network functions.

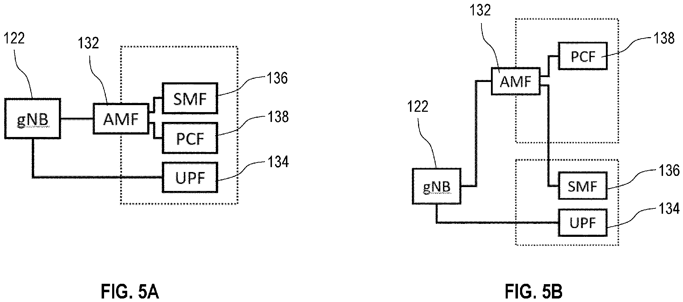

Currently, the key generation framework does not allow for the generation of different keys necessary for the encryption of multiple, simultaneous NAS security contexts and/or UP flows. Furthermore, it is not possible to support, even if accepting some trade-offs, fully distributed deployments. When considering CN deployments (and especially containerized ones), the current 5GS introduces topological limitations. Since the AMF is, from RAN perspective, the single-entry point into the CN, as shown in **Fig. 5A****.**

In the architecture shown in Fig. 5A, the gNodeB (gNB) 122 from the RAN 120 serves as the point of interaction with the CN 130. All control plane signaling from the gNB 122 is funneled through the AMF 132, making it the centralized termination point for NAS signaling, especially related to the NAS security context termination. This setup means that the AMF 132 is responsible for handling access, mobility management, and initial signaling traffic before passing session or policy-specific information to other core functions.

From the AMF 132, the CP is extended to the SMF 136 and the PCF 138. The SMF 136 manages the lifecycle of data sessions, including session establishment, modification, and release. It works in coordination with the AMF 132 to ensure that session-specific signaling is executed securely and efficiently. The PCF 138 enforces policy rules and quality of service (QoS) parameters, influencing both the SMF's session management operations and the UP-F's 134 data routing activities. Additionally, it manages access and mobility policies and user equipment policies.

The UP flows from the gNB to the UPF 134, bypassing the AMF 132. The UPF 134 is responsible for forwarding user data to and from the DN 140, ensuring low latency and high performance. This separation of the control and user planes, with the AMF 132 handling signaling and the UPF 134 managing data flows, aligns with the principles of 5G's service-based architecture.

For deployment scenarios, as shown in **Fig. 5B****,** where part of the CN 130 would be preferably deployed in another location (e.g. if session management CP and UP should be placed on customer premises), the CP 130 should be routed towards the AMF 132 to reach the SMF 136. However, the UP can be routed directly toward the edge/customer location.

Fig. 5B illustrates a deployment scenario in which the 5G Core Network (CN) components are distributed between different locations to optimize for specific use cases, such as placing session management CP and UP functions closer to customer premises. Unlike the centralized architecture seen in previous figures, Fig. 5B demonstrates a partially decentralized approach, where certain components maintain centralized control, while others are deployed closer to the edge for enhanced performance and reduced latency.

Fig. 5B shows the gNB 122 interacting with both the centralized AMF 132 and decentralized components, including the SMF 136 and UPF 134. The AMF 132 remains the primary point for CP signaling, coordinating mobility management and session establishment with other CN functions. The control plane signaling flow begins at the gNB 122 and is routed through the AMF 132 to reach the SMF 136, enabling session management. The AMF 132 also interacts with the PCF 138 to enforce policies, manage quality of service (QoS), and influence session parameters. It is currently not possible to directly route CP directly towards a SMF. This not only increases CP latency, but also reduces reliability due to the chaining of elements.

In contrast to the control plane signaling, user plane traffic is directly routed from the gNB 122 to the UPF 134, bypassing the AMF 132. The UPF 134, in this scenario, is located closer to customer premises, enabling low-latency data transport and efficient handling of edge computing or private network requirements. This direct routing of user plane traffic allows the system to offload processing from the centralized core, improving scalability and reducing latency for latency-sensitive applications.

Compared to Fig. 5A, Fig. 5B introduces the concept of distributing the CN functions across different locations. While Fig. 5A emphasized a centralized architecture with the AMF 132 as the sole entry point for both control and user planes, Fig. 5B illustrates how deployment flexibility can be partially achieved by separating the control and user plane functions and deploying them closer to where they are needed. This approach aligns with edge computing principles and customer-specific use cases, allowing the SMF 136 and UPF 134 to be placed on customer premises while maintaining centralized control via the AMF 132 and PCF 138.

Fig. 5B emphasizes the potential for hybrid deployments within the 5G system, where centralized control coexists with distributed user plane functions. This architecture enables dynamic adaptability to network demands while supporting diverse deployment scenarios, such as private 5G networks, industrial automation, and ultra-reliable low-latency communications (URLLC). By routing control and user planes separately, the system may achieve a balance between centralized management and localized performance optimization.

A challenge lies in addressing the complexities of encryption and key derivation within a distributed control plane topology, and especially when considering disaggregated NAS. While the advantages of such a topology are well understood, the question remains as to how encryption mechanisms can be effectively implemented in this context. Ensuring that key derivation and distribution operate seamlessly in a deployment where NAS functions are distributed presents significant difficulties.

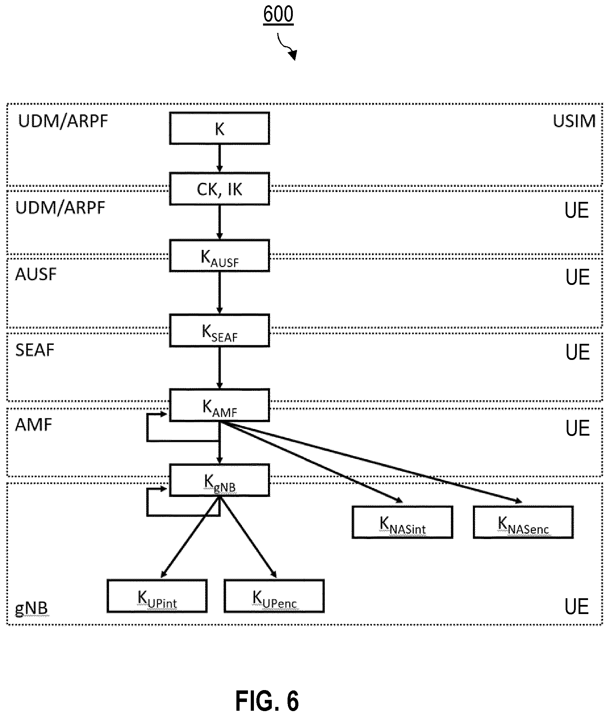

The present disclosure centers on mechanisms for 5G-AKA while emphasizing that the same principles can be applied to EAP-AKA (Extensible Authentication Protocol - Authentication and Key Agreement). It builds upon the current state-of-the-art key derivation methods employed in the 5G system, using them as a foundation. For clarity and simplicity, **Fig. 6** provides a streamlined representation of the process. Fig. 6 provides an overview of a key derivation process 600, starting from a root key K generated during authentication and progressing through intermediate keys to the session-specific keys used for encrypting and protecting data and signaling. The hierarchy ensures that the security contexts are effectively managed across different layers of communication in the 5G system.

At the top of the hierarchy is the root key, denoted as K, which may be generated during an authentication process. This key may be shared between the UE 110 and the network and may form the basis for all subsequent key derivations on the network as well as UE side. From K, a Cipher Key (CK) and Integrity Key (IK) may be derived on the network and UE side. These keys may be used to create an Anchor Key (K_{AUSF}) at the Authentication Server Function (AUSF) and UE 110, which marks the entry point into the 5G Core Network's security framework.

A Security Anchor Key (K_{SEAF}) may be derived from K_{AUSF} by the Security Anchor Function (SEAF) within the Serving Network and the by the UE 110. K_{SEAF} may then be used to generate the Access Management Key (K_{AMF}) within the AMF 132 and the UE 110. K_{AMF} may provide the security context for managing NAS signaling between the UE 110 and the CN 130.

From K_{AMF}, additional keys may be derived to support specific security functions. A gNodeB Key (K_{gNB}) may be generated at both ends for protecting Radio Resource Control (RRC) signaling and UP data on the air interface. Similarly, NAS signaling keys K_{NASint} and K_{NASenc} may be derived from K_{AMF} at both ends to ensure the integrity and confidentiality of NAS signaling messages between the UE 110 and the AMF 132. For the user plane, K_{gNB} may be further used to derive K_{UPint} and K_{UPenc}, which may protect integrity and confidentiality of user data.

In order to efficiently implement secure CP between the UE 110 and different NAS CP entities in the CN 130, the proposed solution introduces the generation of multiple sub-keys for the UE 110 and each of the NAS CP entities, from which encryption and integrity protection keys can be derived.

For this, UE 110 and CN entities may respectively be equipped with one or more processors, memory, and communication interfaces to perform the tasks required for deriving encryption and integrity protection keys, managing multiple NAS security contexts and/or UP flows, and establishing secure communication. The processors may be responsible for executing the necessary algorithms and protocols to derive the keys. They may handle cryptographic operations, including the key derivation processes and the initialization and maintenance of cryptographic state machines for each NAS security context or UP flow. The memory may store security-related information, including derived keys, cryptographic state machine parameters, and counters. This memory may also retain configuration data necessary for associating keys with specific contexts or flows. The communication interfaces may enable the UE 110 to interact with the CN 130 and the RAN 120. These interfaces may handle the exchange of signaling messages for setting up security contexts, managing keys, and maintaining synchronization between the UE 110 and network entities such as the AMF, SMF, or UPF.

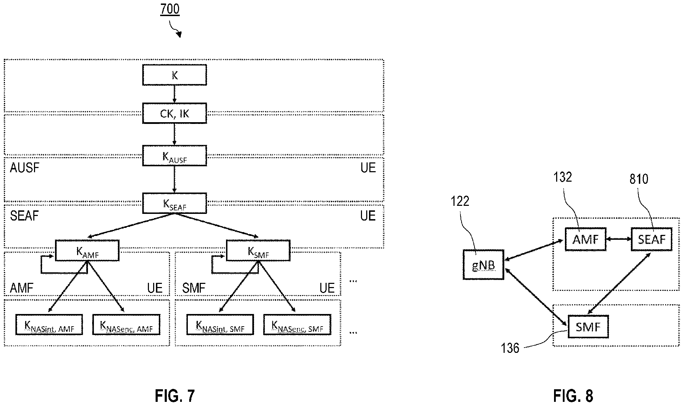

**Fig. 7** presents an enhanced key hierarchy 700 for secure communication in a telecommunication system by introducing the generation of multiple sub-keys tailored for individual NAS CP entities. This approach addresses the need for securely managing distinct NAS security contexts between the UE 110 and different CP entities in the CN 130. Fig. 7 reflects a more flexible and granular security architecture compared to the centralized approach discussed earlier.

The SEAF as well as the UE 110 derives a security anchor key, denoted as K_{SEAF}, from the long-term key K shared with the UE 110 during authentication. Once derived, K_{SEAF} may be distributed to multiple CP entities, such as the AMF 132 and the SMF 136, to enable them to manage security for their specific control plane operations. This distribution enables decentralization while maintaining secure communication.

In Fig. 7, the AMF 132 and SMF 136 are shown as distinct CP entities that receive K_{SEAF} from SEAF and independently derive keys for encryption and integrity protection specific to their respective NAS security contexts. These keys, such as K_{NASint,AMF} and K_{NASenc,AMF}, are derived by the AMF 132 to secure mobility management flows. Similarly, the SMF 136 derives keys, including K_{NASint,SMF} and K_{NASenc,SMF}, to secure session management communications. The derivation process for these keys can leverage unique identifiers, such as a respective CP identifier or a NAS container type, ensuring that each derived key is uniquely tied to a specific security context or session. Note that the UE 110 may generate the respective counterpart keys. The same approach may be extended to provide a similar key derivation for PCF 138 and/or other CP entities.

Compared to the previous figure, Fig. 7 emphasizes the distribution of key management across multiple CP entities rather than centralizing it within the AMF. This decentralized approach may provide greater scalability and flexibility, especially in systems with diverse and dynamic deployment scenarios. By enabling each CP entity to generate its own encryption and integrity protection keys, the architecture can support more granular security policies and adapt to a variety of use cases, including those requiring distinct session or container-based protections.

To avoid a new re-registration, K_{SEAF} may be reused, from which a new CP entity-specific key for SMF, PCF, etc. may be derived. From that CP entity-specific key, further K_{NASint}, K_{NASenc} keys may be derived, corresponding to each NAS security context. The advantage of this setup, which is shown in **Fig. 8****,** is that not all of the NAS communication needs to be routed via the AMF 132. In a topology such as the one show in the Fig. 8 below, once K_{SMF} has been derived, it is not necessary for the SMF 136 to communicate with the SEAF 810. Thus, it is possible to substantially reduce the necessary communication between the edge and central locations to just key derivation. Hence, it is possible to decrease CP latency and increase reliability, as just an initial setup would require interaction with the SEAF, typically co-located with the AMF, instead of all signaling as is currently the case.

Fig. 8 illustrates an optimized key management topology in which the security anchor key (K_{SEAF}), managed by the SEAF 810, can be reused to derive subsequent keys for control plane entities such as the AMF 132, SMF 136, and PCF (not explicitly shown in this figure). SEAF 810 may be configured to derive a security anchor key (K_{SEAF}) from the long-term key (K) shared with the UE and distribute the derived security anchor key (K_{SEAF}) to a plurality of CP and/or UP entities (here: AMF 132 and SMF 136). This reuse of K_{SEAF} enables the derivation of keys specific to NAS security contexts without necessitating a full re-registration process. Fig. 8 highlights a significant architectural shift compared to previous setups.

Unlike earlier architectures, where the AMF 132 acted as the central termination point for NAS signaling and required extensive interaction with other network functions, this setup allows the SMF 136 to independently operate after its SMF-specific key (K_{SMF}) has been derived. The SEAF 810 may directly facilitate the derivation of K_{SMF} during the key hierarchy process, enabling the SMF 136 to secure its NAS signaling without additional dependency on the AMF 132. This arrangement may reduce the overhead of frequent communication between the SMF and AMF 132, particularly when these entities are deployed across different locations, such as edge and central networks. Additionally, the Fig. 8 emphasizes the decoupling of NAS communication paths from the AMF 132. By allowing the SMF 136 to establish its own NAS security context directly with the UE via the gNodeB 122, the architecture avoids routing all NAS communication through the AMF 132. This approach enhances scalability and reduces latency, particularly in deployments requiring distributed or edge-based configurations.

In the current 5G paradigm, since there is only one NAS security context active, only one key of each type may be used. With disaggregated NAS, and especially for the SMF case, a 6GS (or evolved 5GS) may support derivation of multiple keys of the same type (e.g. for PDU sessions steered from different SMFs).

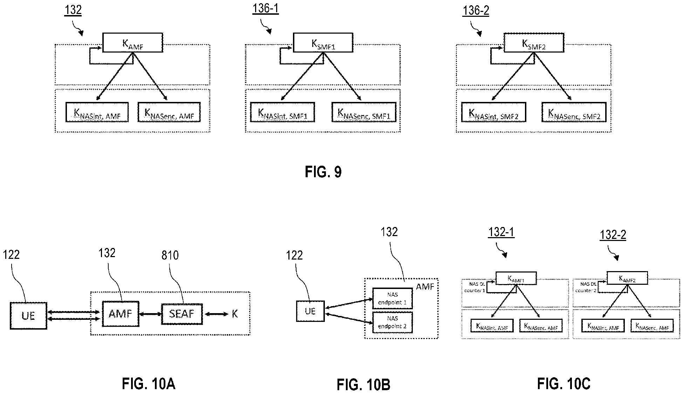

**Fig. 9** illustrates the concept of disaggregated NAS security in an evolved 5G or future 6G system, showing how three different CP entities-here, the AMF 132, SMF1 136-1, and SMF2 136-2-derive their respective keys based on the security anchor key K_{SEAF}. This approach supports the simultaneous management of multiple NAS security contexts, enabling secure communication across various CP entities.

In this key derivation hierarchy, the AMF 132 derives an AMF-specific key, denoted as K_{AMF} from the security anchor key K_{SEAF}. From K_{AMF}, the AMF 132 further derives the encryption and integrity protection keys, K_{NASenc,AMF} and K_{NASint,AMF}, to ensure secure communication with the UE 110. These keys are specific to the AMF 132 and are used to protect NAS signaling related to access and mobility management.

Similarly, each of the other CP entities independently derives its own specific keys from K_{SEAF}. For instance, SMF1 136-1 generates the SMF1-specific key K_{SMF1}, which it uses to derive encryption and integrity protection keys K_{NASenc,SMF1} and K_{NASint,SMF1} for secure NAS signaling related to its specific PDU sessions. Likewise, SMF2 136-2 derives the SMF2-specific key K_{SMF2} from K_{SEAF}, subsequently deriving the encryption and integrity protection keys K_{NAS-enc,SMF2} and K_{NASint,SMF2}.

This framework extends the current 5G paradigm by supporting multiple active NAS security contexts simultaneously. In contrast to traditional systems where only one NAS security context and its associated keys are used, the disaggregated NAS approach enables the management of multiple independent security contexts for different CP entities, such as multiple SMFs handling separate PDU sessions. This design allows for greater flexibility and scalability, particularly in advanced use cases requiring dynamic control plane operations or the handling of multiple concurrent sessions.

Another alternative scenario is that of allowing multiple NAS security contexts with a single CP entity. This can be applied to scenarios where an AMF is geographically distributed and the UE 110 could benefit of maintaining multiple NAS counters simultaneously to avoid synchronization issues, which results in the need to support multiple NAS security contexts with a single CP instance.

**Fig. 10A** illustrates an alternative scenario in which a CP entity, for example the AMF 132, handles multiple NAS security contexts with the UE 110 simultaneously. This approach may be particularly suited to deployments where the AMF 132 is geographically distributed, allowing the UE 110 to maintain separate NAS counters for different security contexts. By supporting multiple NAS security contexts within a single CP instance, this design may minimize synchronization challenges and enhances operational flexibility.

In this scenario, each NAS security context between the AMF 132 and the UE 110 may be associated with its own set of encryption and integrity protection keys. These keys may ensure the confidentiality and integrity of NAS signaling for each individual context or flow. The SEAF 810 acts as the key derivation entity, generating the security anchor key (K_{SEAF}) that serves as the basis for deriving the multiple key sets needed for the different NAS security contexts managed by the AMF 132.

This architecture enables the AMF 132 to securely handle multiple concurrent flows with the UE 110, each secured independently with unique encryption and integrity protection keys. Such an approach is particularly beneficial in scenarios where the AMF 132 operates in a distributed fashion, as it ensures robust communication even when the network is subject to mobility or other dynamic conditions. By isolating the security contexts, the system also reduces the risk of key compromise affecting other flows, enhancing the overall security and reliability of NAS communications.

Such a deployment scenario would then translate into multiple K_{AMF} for a single AMF instance, as shown in **Fig. 10B****.** In this case, a single AMF 132 could provide multiple NAS endpoints. This, however, may result in the need of derivation multiple K_{AMF} keys, as shown in **Fig. 10C****,** such that independent NAS downlink counters can be maintained.

Fig. 10C illustrates a scenario in which two separate CP entities, AMF1 and AMF2, independently derive their respective keys from the shared security anchor key, K_{SEAF}. This configuration showcases the ability of the proposed key management framework to support multiple CP instances, each maintaining its own NAS security context with the UE 110. Each context operates in isolation, with its own keys and associated NAS counters, ensuring robust and independent security for every communication flow.

AMF1 derives a specific key, K_{AMF1}, from K_{SEAF}. This AMF1-specific key serves as the basis for deriving encryption and integrity protection keys, K_{NASenc,AMF1} and K_{NASint,AMF1}. These keys are used to secure NAS signaling between the UE 110 and AMF1, providing confidentiality and integrity for access and mobility-related signaling. Alongside the key derivation, a NAS counter specific to AMF1 may be maintained. This counter may ensure synchronization between the UE 110 and AMF1, protecting against replay attacks and maintaining the integrity of the communication channel.

The UE 110 is configured to independently generate the corresponding keys required for secure communication with AMF1. The UE 110 may also maintain a NAS counter specific to AMF1, ensuring synchronization of message sequences between itself and AMF1.

Similarly, AMF2 derives its own specific key, K_{AMF2}, from K_{SEAF}. Using K_{AMF2}, AMF2 generates encryption and integrity protection keys, K_{NASenc,AMF2} and K_{NASint,AMF2}. These keys are used to secure the NAS signaling associated with AMF2, ensuring that this communication remains confidential and tamper-proof. Like AMF1, AMF2 also maintains a separate NAS counter for its security context with the UE 110. This counter ensures proper synchronization of NAS messages between AMF2 and the UE 110, preventing misalignment or replay attacks.

The UE 110 is configured to independently generate the corresponding keys required for secure communication with AMF2. The UE 110 may also maintain a NAS counter specific to AMF2, ensuring synchronization of message sequences between itself and AMF2.

The inclusion of separate NAS counters for AMF1 and AMF2 highlights the independent nature of each NAS security context. Each counter is tied to its respective CP entity and ensures that NAS message sequences are properly tracked within the corresponding security context. This independence allows the system to maintain multiple NAS security contexts simultaneously, ensuring robust security for each CP entity even in complex network deployments.

By enabling each CP entity to independently derive its keys and manage its own NAS counter, the architecture ensures modularity and scalability. This is particularly advantageous in scenarios involving distributed CP deployments, where multiple AMFs may operate in parallel to manage different aspects of mobility and session management. Additionally, the isolation of security contexts may ensure that the compromise of one CP entity or its keys does not affect the security of other entities.

The skilled person having benefit from the present disclosure will appreciate that the SEAF 810, as a key derivation entity within the telecommunication system, may not only distribute the security anchor key (K_{SEAF}) to control plane (CP) entities but also to user plane (UP) entities. This capability may enable the UP entities to derive encryption and integrity protection keys specific to UP flows. These keys can be tied to unique identifiers, such as a UP entity identifier or a specific PDU session identifier, ensuring precise and secure communication in the user plane.

By extending the key distribution function of the SEAF 810 to also include UP entities, the system may support granular security across both the CP and UP. The derivation of UP-specific keys may ensure that user data transmissions can be independently secured, enhancing the robustness of the overall security framework. This approach aligns with the hierarchical key derivation process already established in the system, preserving the integrity and confidentiality of data flows while enabling flexibility in distributed architectures. Such functionality addresses the challenges posed by modern network demands, including dynamic session management and the need for low-latency, high-security user plane operations.

In order to enable a flexible realization of the key derivation and/or transmission, the proposed solution also considers that the key derivation process can be aided by the Access Network (AN). The security mechanisms used between network elements are typically not the same used for UE-CN CP and/or the mechanisms for UP encryption. Current state of the art already provides means of security such connectivity (e.g. mTLS).

In order to avoid the limitation of requiring a network topology providing direct connectivity between a CN element (e.g. SMF) and the SEAF 810, it may be considered that CP signaling for key derivation can be forwarded by the ANF (e.g. gNB). In this way, the connectivity between CN and (R)AN, which is always necessary, can be leveraged for enabling key derivation between entities in the CN without direct connectivity and may result in removing the need for explicit network connectivity between central and edge locations. The following methods may be considered:
- Encapsulation of key derivation messages in NG-AP containers
- Encapsulation of key derivation messages in HTTP messages,
- a (R)AN node providing a service, for example an API, for forwarding messages to other network components.

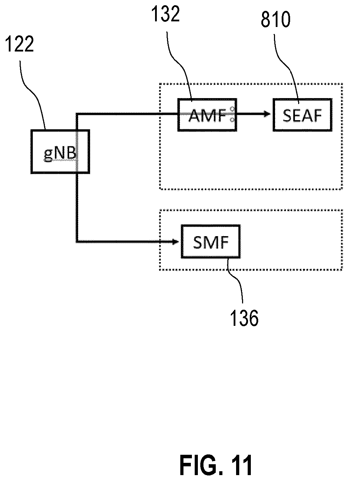

**Fig. 11** illustrates a modified approach for CP signaling during the key derivation process, in which the SEAF 810 communicates with the SMF 136 through the AMF 132 and through the gNodeB (gNB) 122. This setup may leverage the inherent connectivity between RAN 120 and CN 130 to forward key derivation messages, thereby eliminating the need for direct network connectivity between central and edge locations where the SEAF 810 and SMF 136 might be deployed.

In this scenario, the SEAF 810 remains the key derivation entity, generating and distributing security anchor keys for CP and/or UP entities. However, instead of relying on direct communication with the SMF 136, the SEAF forwards its key derivation signaling through the AMF 132. The AMF 132, in turn, utilizes its established connection with the gNB 122 to transmit these messages toward the SMF 136. This design exploits the mandatory connectivity between the RAN 120 and CN 130, ensuring that key derivation signaling can be completed without requiring additional network infrastructure between SEAFs 810 and other CP entities, such as the SMF 136.

To facilitate this process, the SEAF's 810 communication interface may be configured to or be configured to instruct the AMF 132 to encapsulate key derivation messages in NG-AP containers. These containers may be transmitted through the gNB 122, ensuring that the messages reach the SMF 136. This encapsulation mechanism may ensure that key derivation signaling is carried seamlessly over the NG interface, leveraging standard protocols already in use for communication between the RAN 120 and the CN 130. Alternatively, the gNB 120 can act as an ANF, providing services such as an API for forwarding messages to CP or UP entities in the CN.

This approach addresses potential limitations of alternative embodiments by removing a need for explicit, direct connectivity between the SEAF 810 and CP and/or UP entities, like SMF 136. Overall, Fig. 11 demonstrates a use of the RAN 120 as an intermediary for key derivation signaling, ensuring that security processes can be executed efficiently without adding network complexity.

Furthermore, embodiments consider applying differently derived keys to UP integrity protection and UP encryption. Currently, this is realized by derivation from K_{AMF}. It is proposed to derive it from K_{SMF}, which results in multiple K_{UPint} and K_{UPenc} keys in the gNB 122.

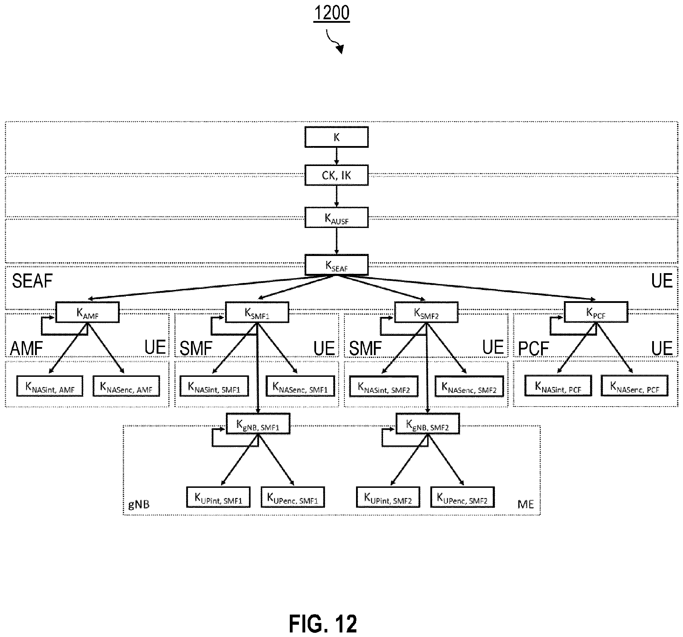

**Fig. 12** illustrates a generation of multiple UP-specific encryption and integrity keys, tied to individual SMFs, providing enhanced security and flexibility in user plane communication.

In this hierarchy, the SMF1-specific key (K_{SMF1}) is derived from the security anchor key (K_{SEAF}) through the key management process. From K_{SMF1}, a gNodeB-specific key (K_{gNB,SMF1}) is further derived. This key may enable the secure interaction between SMF1 and the gNodeB, ensuring that user plane data originating from SMF1 is appropriately protected. Similarly, K_{SMF2} is derived from K_{SEAF} for SMF2, and K_{gNB,SMF2} is subsequently derived from K_{SMF2}, establishing a parallel security context for SMF2 and the gNodeB.

From K_{gNB,SMF1}, the keys for UP integrity protection (K_{UPint,SMF1}) and UP encryption (K_{UPenc,SMF1}) are derived. These keys secure the integrity and confidentiality of user plane data sessions managed by SMF1. Similarly, from K_{gNB,SMF2}, K_{UPint,SMF2} and K_{UPenc,SMF2} are derived to provide the same protection for data sessions managed by SMF2. By deriving these keys separately for each SMF, the system may support distinct and isolated security contexts for user plane communication associated with different session management functions.

The keys K_{UPint,SMF1} and K_{UPenc,SMF1} are used to protect the user plane data for PDU sessions managed by SMF1. K_{UPint,SMF1} ensures the integrity of the data by allowing the gNodeB to verify that the transmitted data has not been tampered with during transit. K_{UPenc,SMF1} on the other hand, ensures the confidentiality of the data, encrypting it to prevent unauthorized access. Similarly, K_{UPint,SMF2} and K_{UPint,SMF2} provide equivalent integrity and confidentiality protection for data sessions managed by SMF2. These keys are particularly useful in scenarios where multiple SMFs handle different PDU sessions for the same user or where session-specific security requirements necessitate unique keying material. In this way, it is possible to provide differently encrypted user planes based on where the UP originated.

The UE 110 is configured to independently generate the corresponding keys required protect the user plane data for PDU sessions.

The skilled person having benefit from the present disclosure will appreciate that it may be possible to apply K_{UPint,SMF1} and K_{UPenc,SMF1} independently of disaggregated NAS. While it is most beneficial to both base CP and UP encryption and/or integrity on a key different than K_{AMF} (e.g. K_{SMF}), it may be possible to keep the current setup where CP encryption and/or security is based on K_{AMF} (e.g. current NAS) but UP-related keys are not derived from K_{AMF}. In this way, it is possible to provide differently encrypted user planes based on where the UP originated even if disaggregated NAS is not being used or cannot be deployed.

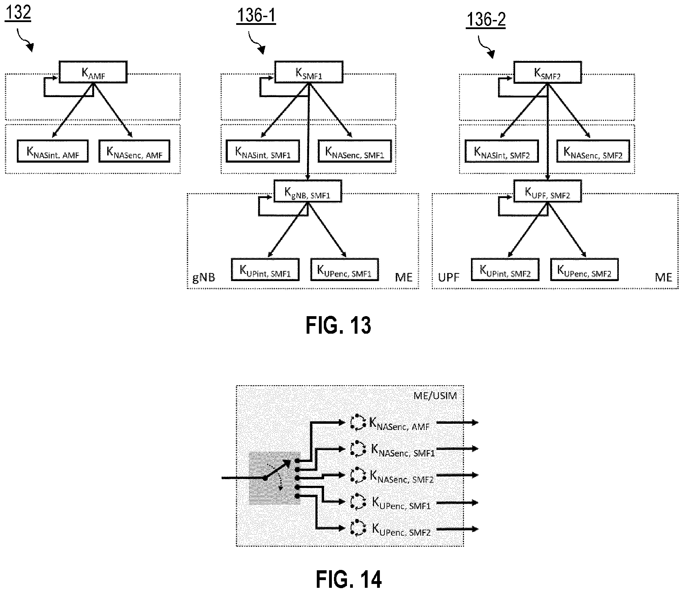

To further increase security segmentation and reduce the amount of hop-by-hop trust assumptions, it is furthermore proposed the placement of different K_{UPenc} in different locations, such that UP can be independently secured between UPFs belonging to different trust domains. This is shown in **Fig. 13****.**

In this hierarchy, the SMF1-specific key (K_{SMF1}) is derived from the security anchor key (K_{SEAF}) through the key management process. From K_{SMF1}, a gNodeB-specific key (K_{gNB,SMF1}) is further derived. This key may enable the secure interaction between SMF1 and the gNodeB, ensuring that user plane data originating from SMF1 is appropriately protected. Similarly, K_{SMF2} is derived from K_{SEAF} for SMF2, and K_{UPF,SMF2} is subsequently derived from K_{SMF2}, establishing a parallel security context for SMF2 and the UPF.

From K_{gNB,SMF}, the keys for UP integrity protection (K_{UPint,SMF1}) and UP encryption (K_{UPenc,SMF1}) are derived. These keys secure the integrity and confidentiality of user plane data sessions managed by SMF1. Similarly, from K_{UPF,SMF2}, K_{UPint,SMF2} and K_{UPenc,SMF2} are derived to provide the same protection for data sessions managed by SMF2. By deriving these keys separately for each SMF, the system may support distinct and isolated security contexts for user plane communication associated with different session management functions.

The UE 110 is configured to independently generate the corresponding keys required protect the user plane data for PDU sessions.

An encryption algorithm (similar case of integrity protection, although it may be simpler) typically requires an initialization, where based on input parameters, different variables/states are created in the cryptographic algorithm. It may thus be necessary to store a "state machine" of a given cryptographic algorithm when switching between NAS security contexts and/or UP flows. The UE 110 needs to map specific traffic to a specific state cryptographic state machine. The following use cases may be considered:
- NAS traffic
   ∘ use specific encryption and/or integrity protection for a NAS message to/from a specific CP entity
   ∘ use specific encryption and/or integrity protection for a given type of NAS messages
- UP traffic
   ∘ use specific encryption and/or integrity protection for user plane traffic associated with a specific SMF.

From the CN side, a CN entity may need to perform the same association, such that the same state machine (based on the same key and with the same counters) may be used on the other side. This solution may consider associating to any of the following:
- a specific UE
- a specific use typea specific NAS container type/NAS module type.

This is illustrated in **Fig. 14****.** Encryption and integrity protection algorithms require initialization based on specific input parameters, resulting in the creation of different internal variables or states within the cryptographic algorithm. To ensure consistent and secure communication when switching between security contexts or flows, it may be necessary to maintain and manage a "state machine" for each cryptographic algorithm instance.

For the UE 110, this means mapping traffic to the appropriate cryptographic state machine. For example, the UE 110 may associate specific NAS messages with the corresponding NAS security context and its related cryptographic state, determined by the CP entity responsible for that context. Similarly, for user plane traffic, the UE may use the cryptographic state associated with the SMF 136 managing the corresponding PDU session. This mapping may ensure that the correct keys, counters, and initialization parameters are used for encryption and integrity protection, preventing misalignment or security vulnerabilities. Thus, configuring the UE 110 to maintain a plurality of cryptographic state machines may provide the necessary flexibility to handle multiple NAS security contexts and UP flows securely and efficiently. By associating each cryptographic state machine with a specific NAS security context or UP flow, the UE 110 may ensure that the correct encryption and integrity protection mechanisms are applied for each type of traffic. Mapping traffic to the corresponding state machine based on a specific CP entity, NAS container type, or SMF managing the UP flow may allow the UE to dynamically and accurately route traffic through the appropriate security context.

On the CN side, entities such as the AMF 132, SMF 136, or other control and user plane functions may perform similar associations. The CN entity may use the same cryptographic state as the UE to ensure proper decryption and verification of traffic. This may include using the same keys, counters, and initialization parameters for specific NAS or user plane flows. By doing so, both ends of the communication maintain may synchronization, enabling secure and reliable data exchange. Thus, a CP and/or UP entity to maintain cryptographic state machines may ensures proper management of security contexts and facilitates synchronized and secure interactions with the UE. Associating each cryptographic state machine with a specific NAS security context or UP flow, along with its corresponding set of encryption and integrity protection keys, may ensure that the cryptographic operations are precise and context-specific. This structure allows each CP or UP entity to manage its own security context independently, enabling modularity and scalability, particularly in distributed network architectures. The inclusion of counters and algorithm-specific parameters as part of the cryptographic state machine may be essential for maintaining synchronization between the CP and/or UP entity and the UE. Counters may prevent replay attacks by ensuring that messages are processed in the correct order, while algorithm-specific parameters may initialize and maintain the cryptographic state for consistent encryption and integrity protection. Together, these components may ensure secure, reliable communication, even in scenarios where multiple CP and/or UP entities interact with the same UE.

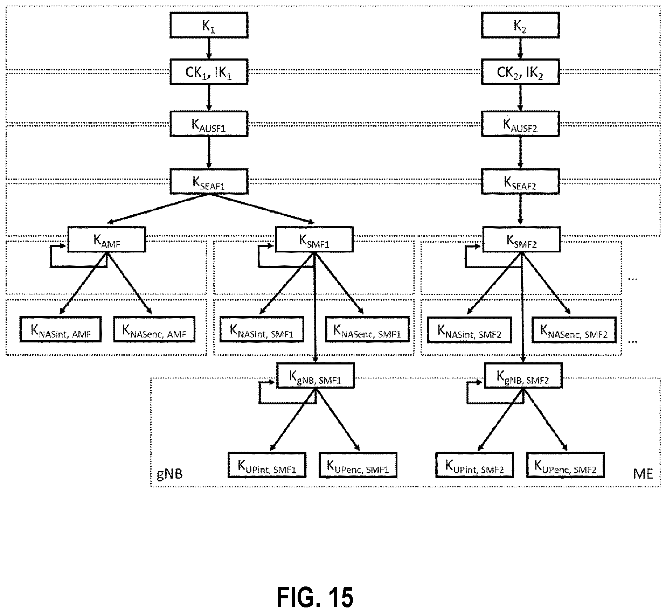

If a full decoupling between different network areas is desirable, albeit at the cost of device complexity, the use of multiple long-term keys (K) may be considered. In this case, multiple key derivation branches may be provided based on the different long-term keys, as shown in **Fig. 15****.**

Fig. 15 illustrates a key hierarchy supporting the use of multiple long-term keys, K₁ and K₂, to enable full decoupling between different network areas. This approach, while potentially increasing device complexity, may allow for separate and independent key derivation branches, ensuring distinct security contexts for different control and user plane entities.

The long-term key K₁ serves as the foundation for one branch of the key hierarchy. From K₁, the cipher key (CK,) and integrity key (K₁) are derived, which are then used to generate the anchor key K_{AUSF1} within the AUSF. K_{AUSF1} is used by the SEAF1 to produce K_{SEAF1}, the security anchor key for this branch. K_{SEAF}, enables the derivation of control plane and user plane keys. Specifically, K_{AMF} is derived to secure NAS signaling for access and mobility management, while K_{SMF1} is derived to secure session management operations. From K_{SMF1} further keys, such as encryption and integrity protection keys for NAS signaling, as well as user plane keys, are generated. These keys secure the respective NAS and user plane traffic associated with this branch.

The long-term key K₂ operates independently, forming the basis of a separate key derivation branch. Similar to K₁, K₂ is used to derive CK₂ and IK₂, which in turn produce K_{AUSF2}. The SEAF2 uses K_{AUSF2} to derive K_{SEAF2}, establishing the security anchor for this branch. From K_{SEAF2}, the Session Management Function-specific key K_{SMF2} is derived, which enables the generation of NAS encryption and integrity keys and user plane encryption and integrity keys. These keys secure the NAS and user plane traffic specific to the entities and flows associated with K₂.

This approach allows for complete decoupling between the security contexts of different network areas, with each branch of the hierarchy operating independently under its own long-term key. Such decoupling can support scenarios where network areas are geographically or functionally separated, providing greater modularity and control over security configurations. While the use of multiple long-term keys increases the complexity of key management on the device, it ensures a robust and scalable security framework for next-generation telecommunication systems.

While the UE 110 (USIM) may be provisioned with all the long-term keys (e.g. K₁, K₂), K₁ and K₂ may be stored in different branch-specific ARPFs, such that a full trust separation can be achieved.

Thus, the UE 110 may be configured to store multiple long-term keys (e.g. K₁, K₂), with each long-term key corresponding to a distinct network area or trust domain within the telecommunication system. This configuration enables the UE 110 to maintain separate security contexts for different network areas, ensuring modular and secure communication across various parts of the network. The UE 110 may be configured to derive a security anchor key for each long-term key stored. This process may form a foundation for subsequent key derivations within the associated network area or trust domain. From each derived security anchor key, the processing module generates encryption and integrity protection keys. These keys are specific to the NAS security contexts and UP flows associated with the respective network area or trust domain.

This capability allows the UE 110 to securely and independently manage multiple security contexts, ensuring that the keys and cryptographic parameters for one network area or trust domain remain isolated from others. Such a design may be particularly advantageous in scenarios where the telecommunication system spans multiple geographical areas, operational domains, or levels of trust, as it ensures that security configurations are tailored to the specific requirements of each domain. By leveraging this approach, the UE 110 may enhance both the flexibility and robustness of its security framework, supporting advanced use cases in next-generation communication systems.

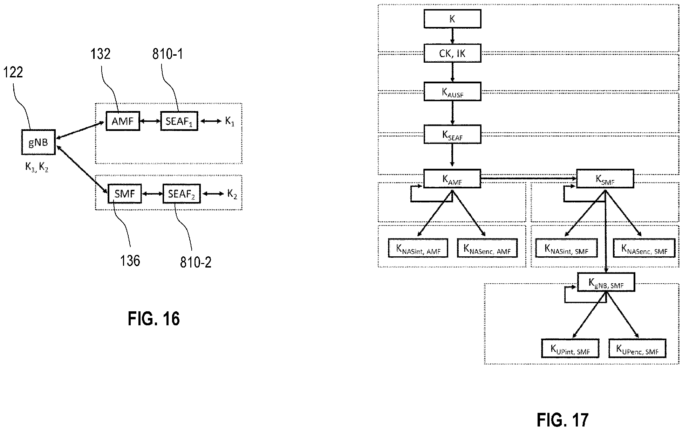

**Fig. 16** illustrates a simplified control plane (CP) topology in a telecommunication system that supports the use of multiple long-term keys (e.g. K₁, K₂) to enable distinct and independent key derivation processes. This approach moves away from relying on a single long-term key and a centralized AMF 132 as the sole point of contact, providing greater flexibility in deployment and security management.

In this topology, the first long-term key, K₁, is used for key derivation associated with the SEAF1 810-1 and further with the AMF 132. The long-term key K₁ serves as the foundational secret for SEAF1 810-1 to generate its security anchor key, which is subsequently used to derive encryption and integrity protection keys specific to the AMF 132 and its associated NAS security contexts. This ensures that the AMF's 132 security operations are securely and independently managed within the domain governed by K₁.

Similarly, the second long-term key, K₂, is used for key derivation associated with the SEAF2 810-2 and further with the SMF 136. SEAF2 810-2 utilizes K2 to generate its own security anchor key, which serves as the basis for deriving encryption and integrity protection keys specific to the SMF 136. These keys may secure UP flows and session-specific communication managed by the SMF 136, operating independently from the AMF and its associated security contexts.

This deployment scenario demonstrates a modular and distributed approach to security, where different network areas or trust domains are managed with separate long-term keys and distinct SEAF instances. While the use of multiple long-term keys may increase complexity and may require specialized hardware support, such as enhancements in the USIM, it may offer the advantage of flexibility and scalability. By decoupling the security contexts of the AMF and SMF, the system can adapt to dynamic and diverse network requirements, supporting advanced use cases in next-generation communication systems.

An important aspect in order to be able to efficiently support key derivation for distributed NAS is that it is necessary for the network to be aware of the capabilities of the UE 110. Currently, as there is only a single NAS security context and UP encryption, the number of keys the UE 110 needs to manage is limited. This is not the case if distributed NAS is to be used.

In order for the CN to be able to ascertain whether a UE 110 should be allowed to request more NAS security contexts or whether it can use UP integrity/encryption, it may be beneficial for the CN 130 and/or (R)AN 120 to know whether the UE 110 is capable of managing enough keys. A UE 110 may not be able to manage an infinite number of keys, and hence it is may be necessary that the UE 110 signals (at least) the CN 130 of its capabilities, for example regarding:
- number of supported parallel security contexts
- supported algorithms for different security context capabilities
- number of long-term keys supported and/or configured
- number and/or types of keys supported.

This information may be then forwarded by the CN 130 towards the RAN 120, which may allow to reuse already existing connectivity and network topologies.

Given that the previously described vertical key derivation tends to be more cumbersome than horizontal key derivation (the security requirements "upwards" are more stringent), an additional optimization may be considered to provide horizontal key derivation.

In the horizontal key derivation example case illustrated in **Fig. 17****,** is considered to use K_{AMF} to derive other NAS/UP keys. As before, K_{AMF} is based on K_{SEAF}. However, K_{SMF} is now derived based on K_{AMF} instead of K_{SEAF}. In general, a CP/UP entity (e.g., AMF) in a telecommunication system may be configured to derive, based on a security anchor key (K_{SEAF}), a CP/UP entity-specific key (e.g., K_{AMF}) from the security anchor key and forward the derived CP/UP entity-specific key (e.g., K_{AMF}) to another CP/UP entity (e.g., SMF). The other CP/UP entity (e.g., SMF) may then derive, based on the forwarded CP/UP entity-specific key (e.g., K_{AMF}), another CP/UP entity-specific key (e.g., K_{SMF}). Here, the forwarded the CP/UP entity-specific key (e.g., K_{AMF}) acts as a security anchor key for the other CP/UP entity (e.g., SMF).

The essence of horizontal key derivation, as illustrated in Fig. 17, lies in a sequential derivation and forwarding of entity-specific keys between CP/UP entities in a telecommunication system. In this approach, a security anchor key such as K_{SEAF} is used by an initial CP entity, for example, the AMF, to derive its specific key K_{AMF}. This key serves not only as the foundation for securing NAS signaling within the AMF but also as a secondary security anchor key that can be forwarded to another CP or UP entity, such as the SMF.

The receiving entity, in this case the SMF, uses the forwarded K_{AMF} as its input security anchor and derives its own specific key, K_{SMF}. This process may continue hierarchically, with the derived K_{SMF} being further used to generate additional keys for encryption and integrity protection of NAS signaling (K_{NASint,SMF} and K_{NASenc,SMF}) or user plane flows (K_{UPint,SMF} and K_{UPenc,SMF}). By chaining key derivations in this manner, each derived key may be securely linked to the preceding one, providing a robust mechanism for establishing security contexts while limiting the scope of each key to its respective function.

An alternative embodiment following this principle could involve a dynamic key forwarding mechanism where keys such as K_{AMF} are forwarded only when necessary. For example, in scenarios with distributed core networks, the AMF may selectively forward K_{AMF} to only those SMFs managing PDU sessions relevant to the UE, reducing overhead and minimizing key exposure.

Another embodiment could involve intermediate CP entities acting as proxies for key forwarding. For instance, in networks with multiple layers of security functions, an intermediate node (e.g., a Policy Control Function) might receive K_{AMF}, derive additional context-specific keys, and then forward the refined key material to downstream entities such as the SMF. This cascading key derivation ensures security isolation while accommodating more complex network topologies.

An advantage of this approach is that it may only use communication between CN functions "at the same level", whereas communication with the SEAF and/or AUSF may require different security requirements.

To summarize, the present disclosure proposes a user equipment (UE) designed for secure communication in a telecommunication system. The UE includes a processor capable of deriving multiple encryption and integrity protection keys from a long-term key shared with the Core Network (CN). These derived keys are used to establish encrypted and integrity-protected communication for various Non-Access Stratum (NAS) security contexts and user plane (UP) flows.

The UE may associate the derived keys with specific purposes, types of data, or network identifiers, ensuring precise security for different contexts. It can also map keys to UP flows, NAS security contexts, or types of NAS messages, depending on their purpose. The processor derives these keys dynamically, responding to NAS or UP requests made by the UE to the CN.

The UE may include secure storage for the long-term key and can derive security anchor keys from it based on parameters received from the CN. From these anchor keys, the processor generates the encryption and integrity protection keys for use in NAS and UP communication. The storage can hold multiple long-term keys, each tied to different network areas or trust domains, enabling the UE to derive security keys specific to those areas or domains.

The UE may be further configured to maintain multiple cryptographic state machines, each tied to a specific NAS security context or UP flow. It maps traffic to these state machines based on parameters such as control plane (CP) entities, NAS container types, or session management functions (SMFs) managing UP flows.

The UE's communication interface may allow it to signal its capabilities to the CN or the access network. These capabilities may include the number of security contexts it can manage, the supported cryptographic algorithms, the number of long-term keys it can handle, and the types of encryption and integrity keys it can generate. This signaling may occur during registration or re-registration and includes mechanisms to protect the transmitted capability information through encryption and integrity protection.

Additionally, the present disclosure proposes a method for the UE to derive the required keys and establish secure communication for each NAS context and UP flow, ensuring that each communication instance is adequately encrypted and integrity-protected.

Further, the present disclosure proposes a control plane (CP) or user plane (UP) entity in a telecommunication system, such as the AMF, SMF, or PCF, which is configured to derive encryption and integrity protection keys for securing communication with a User Equipment (UE). Using a security anchor key, the CP or UP entity generates keys specific to each NAS security context or UP flow associated with the UE. These keys ensure that communication between the entity and the UE is encrypted and protected against tampering.

The CP or UP entity may derive a unique, entity-specific key from the security anchor key, which is then used to generate the encryption and integrity protection keys required for communication with the UE. In cases where UP flows are involved, the CP or UP entity may further derive keys for user plane encryption and integrity protection to safeguard user data. The key derivation process may rely on unique identifiers such as entity-specific identifiers, PDU session identifiers, or NAS container types, allowing precise mapping of keys to their respective contexts or flows.

The CP or UP entity may be capable of handling multiple NAS security contexts and UP flows simultaneously, with each context or flow managed using a unique set of derived keys. To maintain synchronization between the CP or UP entity and the UE, the entity may employ cryptographic state machines for each context or flow. These state machines store the derived keys along with counters and algorithm-specific parameters, ensuring that communication remains secure and aligned.

The CP or UP entity may inform the UE which long-term key to use for deriving the security anchor key, enabling the UE to synchronize its key derivation process with the entity.

Additionally, the present disclosure proposes a method where the CP or UP entity derives the necessary keys and establishes encrypted and integrity-protected communication with the UE, ensuring robust security across all associated NAS and UP contexts.

Further, the present disclosure proposes a key derivation entity (e.g., SEAF) designed to manage key generation and distribution within a telecommunication system. This entity includes a key derivation processor that derives a security anchor key from a long-term key shared with a User Equipment (UE). The derived security anchor key is then distributed to multiple control plane (CP) and/or user plane (UP) entities within the system.

The key derivation process may be based on an Authentication and Key Agreement (AKA) protocol, leveraging information exchanged between the UE and the core network. The entity may also be capable of updating the security anchor key periodically or in response to network events, such as changes in conditions or UE mobility, ensuring the continued security and relevance of the derived keys.

The communication interface of the key derivation entity may facilitate the distribution of the derived keys. It may be configured to encapsulate key derivation messages in NG-AP containers or HTTP messages for transmission via the Radio Access Network (RAN). This interface may also indicate to the UE or the core network which long-term key should be used for a specific NAS security context or user plane flow. Furthermore, the interface may support the forwarding of control plane signaling related to key derivation through an Access Network Function (ANF), providing flexibility in managing key distribution across network layers.

The derived security anchor key may be distributed to CP and/or UP entities to enable them to generate encryption and integrity protection keys specific to NAS security contexts and user plane flows.

Additionally, the present disclosure proposes a method for deriving and distributing the security anchor key.

Further, the present disclosure proposes a telecommunication system designed to manage NAS security contexts and user plane (UP) flows through coordinated key derivation and secure communication mechanisms. The system includes a key derivation entity (e.g., SEAF) responsible for deriving a security anchor key from a long-term key shared with the User Equipment (UE). This security anchor key is distributed to multiple control plane (CP) and user plane (UP) entities within the system.

The CP and UP entities use the received security anchor key to derive encryption and integrity protection keys specific to NAS security contexts or UP flows associated with the UE. These keys are then employed to establish secure communication with the UE, ensuring the confidentiality and integrity of data transmissions within the respective contexts or flows.

Additionally, the system may include a UE configured to derive encryption and integrity protection keys from the same long-term key shared with the core network. The UE uses these derived keys to establish secure communication with the CP and UP entities for its NAS security contexts and UP flows.

The present disclosure may be applicable to a wide range of telecommunication systems that require secure communication and key management. One example is 5G networks, where the architecture relies on service-based interactions between control and user plane entities such as the AMF, SMF, and UPF. The present disclosure would enable these entities to securely manage NAS security contexts and user plane flows while ensuring robust encryption and integrity protection for diverse applications, including enhanced mobile broadband (eMBB), ultra-reliable low-latency communication (URLLC), and massive machine-type communication (mMTC).

Another example is private 5G networks, which are deployed in enterprises, manufacturing environments, or critical infrastructure. In these systems, the present disclosure may support the segmentation and isolation of security contexts across different network areas or trust domains, enhancing both scalability and security.

The present disclosure may also be relevant for future telecommunication systems like 6G, where distributed and decentralized architectures are expected to play a significant role. By providing mechanisms for hierarchical key derivation and flexible security management, the present disclosure can address the complexities of next-generation networks that incorporate advanced features such as Al-driven network optimization and dynamic resource allocation.

Additionally, the present disclosure may be applied to hybrid networks that integrate 3GPP and non-3GPP access technologies, such as Wi-Fi, satellite communication, or fixed broadband. In these scenarios, the present disclosure may ensure seamless and secure communication across heterogeneous access types while managing multiple NAS security contexts and user plane flows. It may also be relevant for loT ecosystems, where millions of devices need lightweight and efficient mechanisms for key derivation and secure communication with the network.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A user equipment, UE, for use in a telecommunication system, the user equipment comprising
a processor configured to
derive, from a long-term key shared with a core network, CN, of the telecommunication system, a plurality of encryption and/or integrity protection keys for a plurality of NAS security contexts and/or user plane, UP, flows; and
a communication interface configured to
establish encrypted and/or integrity-protected communication for the plurality of NAS security contexts and/or UP flows using one or more of the keys.

2. The UE of claim 1, wherein the processor is configured to associate a derived encryption and/or integrity protection key and/or a cryptographic state machine associated to the derived key with one or more of:
a purpose or type of data it protects
one or more network identifiers,
a UP flow,
a NAS security context, and/or
a NAS container type of NAS messages based on their purpose, and/or network area or trust domain;

3. The UE of any one of the previous claims, wherein the processor is configured and/or triggered to derive an encryption and/or integrity protection key based on
a NAS or UP message sent by the UE to the CN, and/or
a NAS or UP message received by the UE from the CN.

4. The UE of any one of the previous claims, further comprising
a storage, in particular a USIM, configured to store the long-term key shared with a CN of the telecommunication system,
wherein the processor is configured to
derive, a further key, in particular a security anchor key, based on the long-term key and one or more parameters received from the CN, and
derive, based on the further key, the plurality of encryption and/or integrity protection keys.

5. The UE of claim 4, wherein the storage is further configured to
store a plurality of long-term keys; and
wherein the processing module is configured to or is instructed by the CN to
derive, from a specific long-term key out of of the plurality of long-term keys, a corresponding further key, integrity protection key and/or encryption key.

6. The UE of any one of the previous claims, wherein the communication interface is further configured to
signal, to the CN or an access network, AN, of the telecommunication system, in particular during an initial registration procedure, a re-registration, a session establishment and/or a session modification, the UE's capabilities regarding at least one of:
a number of parallel security contexts,
a further key, integrity protection keys, encryption key and/or cryptographic state machines the UE can manage;
cryptographic algorithms supported by the UE;
a number of long-term keys supported or configured in the UE; and
types of encryption and integrity protection keys the UE can manage.

7. A method for a UE for use in a telecommunication system, the method comprising
deriving, from a long-term key shared with a CN of the telecommunication system, a plurality of encryption and/or integrity protection keys for a plurality of NAS security contexts and/or UP flows; and
establishing encrypted and/or integrity-protected communication for each of the NAS security contexts and/or UP flows using the respective associated encryption and integrity protection keys.

8. A control plane, CP, and/or UP entity in a telecommunication system, in particular an AMF, SMF, PCF or UPF, the CP and/or UP entity comprising
a processor configured to derive, based on a key, at least one encryption key and at least one integrity protection key specific to a NAS security context and/or UP flow associated with a UE; and
a communication interface configured to establish encrypted and/or integrity-protected communication with the UE using the derived encryption and integrity protection keys specific to the NAS security context and/or UP flow.

9. The CP and/or UP entity of claim 8, wherein the processor is configured to
derive a CP and/or UP entity-specific key from the key, and
derive the encryption and integrity protection keys for communication with the UE from the CP and/or UP entity-specific key.

10. The control plane entity of any one of claims 8 to 9, wherein the processor is further configured to
derive, from the CP and/or UP entity-specific key, a plurality of keys for securing the UP, including an encryption key for encrypting UP data and an integrity protection key for ensuring the integrity of UP data and/or
derive encryption and integrity protection keys specific to NAS security contexts and/or UP flows based on unique identifiers, including
a CP and/or UP entity identifier;
a specific PDU session identifier; and/or
a NAS container type.

11. The CP and/or UP entity of any one of claims 8 to 10, wherein the communication interface is configured to
handle multiple NAS security contexts and/or UP flows simultaneously, with each context or flow being associated with a different set of encryption and integrity protection keys.

12. The CP and/or UP entity of any one of claims 8 to 11, wherein the processor is further configured to
maintain a cryptographic state machine, each associated with a specific NAS security context and/or UP flow, the cryptographic state machine being associated with
a specific set of encryption and integrity protection keys derived for the NAS security context and/or UP flow; and
a set of counters and algorithm-specific parameters used to ensure synchronization between the CP and/or UP entity and the UE.

13. A method for CP and/or UP entity in a telecommunication system, the method comprising
deriving, based on a key, at least one encryption key and at least one integrity protection key specific to a NAS security context and/or UP flow associated with a UE; and
establish encrypted and/or integrity-protected communication with the UE using the derived encryption and integrity protection keys specific to the NAS security context and/or UP flow.

14. A key derivation entity for managing key generation in a telecommunication system, comprising
a key derivation processor configured to derive and/or update a key from a long-term key shared with a UE based on information exchanged between the UE and a core network of the telecommunication system; and
a communication interface configured to distribute the key to and/or via a plurality of CP and/or UP entities.

15. A telecommunication system, comprising
a key derivation entity configured to
derive and/or update a key from a long-term key shared with a UE based on information exchanged between the UE and a CN of the telecommunication system; and
distribute the key to and/or via a plurality of CP and/or UP entities;
one or more CP and/or UP entities, each configured to
derive, based on the key, at least one encryption key and at least one integrity protection key specific to a NAS security context and/or UP flow associated with the UE; and
establish secure communication with the UE using the derived encryption and integrity protection keys specific to the NAS security context and/or UP flow.

## Amended claims

### Amended claims in accordance with Rule 137(2) EPC.

1. A user equipment, UE (110), for use in a telecommunication system (100), the user equipment (110) comprising
a processor configured to
derive, from a long-term key shared with a core network, CN (130), of the telecommunication system (100), a plurality of encryption and/or integrity protection keys for a plurality of NAS security contexts and/or user plane, UP, flows; and
a communication interface configured to
establish encrypted and/or integrity-protected communication for the plurality of NAS security contexts and/or UP flows using one or more of the keys,
signal, to the CN (130) or an access network, AN (120), of the telecommunication system (100), the UE's capabilities regarding at least one of:
a number of parallel security contexts the UE (110) can manage, and
a number of long-term keys supported or configured in the UE (110).

2. The UE (110) of claim 1, wherein the processor is configured to associate a derived encryption and/or integrity protection key and/or a cryptographic state machine associated to the derived key with one or more of:
a purpose or type of data it protects
one or more network identifiers,
a UP flow,
a NAS security context, and/or
a NAS container type of NAS messages based on their purpose, and/or network area or trust domain;

3. The UE (110) of any one of the previous claims, wherein the processor is configured and/or triggered to derive an encryption and/or integrity protection key based on
a NAS or UP message sent by the UE (110) to the CN (130), and/or
a NAS or UP message received by the UE (110) from the CN (130).

4. The UE (110) of any one of the previous claims, further comprising a storage, in particular a USIM, configured to store the long-term key shared with a CN (130) of the telecommunication system (100),
wherein the processor is configured to
derive, a further key, in particular a security anchor key, based on the long-term key and one or more parameters received from the CN (130), and
derive, based on the further key, the plurality of encryption and/or integrity protection keys.

5. The UE (110) of claim 4, wherein the storage is further configured to store a plurality of long-term keys; and
wherein the processor is configured to or is instructed by the CN (130) to
derive, from a specific long-term key out of of the plurality of long-term keys, a corresponding further key, integrity protection key and/or encryption key.

6. The UE of any one of the previous claims, wherein the communication interface is further configured to
signal the UE's capabilities during an initial registration procedure, a re-registration, a session establishment and/or a session modification.

7. A method for a UE (110) for use in a telecommunication system (100), the method comprising
deriving, from a long-term key shared with a CN (130) of the telecommunication system (100), a plurality of encryption and/or integrity protection keys for a plurality of NAS security contexts and/or UP flows;
establishing encrypted and/or integrity-protected communication for each of the NAS security contexts and/or UP flows using the respective associated encryption and integrity protection keys; and
signaling, to the CN (130) or an AN (120) of the telecommunication system, the UE's capabilities regarding at least one of
a number of parallel security contexts the UE (110) can manage; and
a number of long-term keys supported or configured in the UE (110).

8. A control plane, CP, and/or UP entity (132, 134, 136, 138) in a telecommunication system (100), in particular an AMF (132), SMF (136), PCF (38) or UPF (134), the CP and/or UP entity (132, 134, 136, 138) comprising
a processor (1401) configured to derive, based on a key, at least one encryption key and at least one integrity protection key specific to a NAS security context and/or UP flow associated with a UE (110); and
a communication interface (1403) configured to
establish encrypted and/or integrity-protected communication with the UE (110) using the derived encryption and integrity protection keys specific to the NAS security context and/or UP flow; and
receive, from the UE (110), signaling of the UE's capabilities regarding at least one of a number of parallel security contexts the UE (110) can manage, and a number of long-term keys supported or configured in the UE (110).

9. The CP and/or UP entity (132, 134, 136, 138) of claim 8, wherein the processor is configured to
derive a CP and/or UP entity-specific key from the key, and
derive the encryption and integrity protection keys for communication with the UE from the CP and/or UP entity-specific key.

10. The control plane entity (132, 134, 136, 138) of any one of claims 8 to 9, wherein the processor is further configured to
derive, from the CP and/or UP entity-specific key, a plurality of keys for securing the UP, including an encryption key for encrypting UP data and an integrity protection key for ensuring the integrity of UP data and/or
derive encryption and integrity protection keys specific to NAS security contexts and/or UP flows based on unique identifiers, including
a CP and/or UP entity identifier;
a specific PDU session identifier; and/or
a NAS container type.

11. The CP and/or UP entity (132, 134, 136, 138) of any one of claims 8 to 10, wherein the communication interface is configured to
handle multiple NAS security contexts and/or UP flows simultaneously, with each context or flow being associated with a different set of encryption and integrity protection keys.

12. The CP and/or UP entity (132, 134, 136, 138) of any one of claims 8 to 11, wherein the processor is further configured to
maintain a cryptographic state machine, each associated with a specific NAS security context and/or UP flow, the cryptographic state machine being associated with
a specific set of encryption and integrity protection keys derived for the NAS security context and/or UP flow; and
a set of counters and algorithm-specific parameters used to ensure synchronization between the CP and/or UP entity (132, 134, 136, 138) and the UE (110).

13. A method for CP and/or UP entity (132, 134, 136, 138) in a telecommunication system (100), the method comprising
deriving, based on a key, at least one encryption key and at least one integrity protection key specific to a NAS security context and/or UP flow associated with a UE (110); and
establish encrypted and/or integrity-protected communication with the UE using the derived encryption and integrity protection keys specific to the NAS security context and/or UP flow; and
receiving, from the UE (110), signaling of the UE's capabilities regarding at least one of: a number of parallel security contexts the UE (110) can manage; and a number of long-term keys supported or configured in the UE (110).

14. A key derivation entity (810) for managing key generation in a telecommunication system (100), comprising
a key derivation processor (1401) configured to derive and/or update a key from a long-term key shared with a UE (110) based on information exchanged between the UE (110) and a core network (130) of the telecommunication system; and
a communication interface (1403) configured to
distribute the key to and/or via a plurality of CP and/or UP entities (132, 136); and
receive, from the UE (110) or via another network entity, signaling of the UE's (110) capabilities regarding at least one of a number of parallel security contexts the UE (110) can manage, and a number of long-term keys supported or configured in the UE (110).

15. A telecommunication (100) system, comprising
a key derivation entity (810) according to claim 14;
one or more CP and/or UP entities (132, 134, 136, 138) according to any one of claims 8 to 11; and
a UE (110) according to any one of claims 1 to 7.
